(19) Europäisches Patentamt
European Patent Office
Office européen des brevets

(11) **EP 1 330 671 B1**

(12) **FASCICULE DE BREVET EUROPEEN**

(45) Date de publication et mention
de la délivrance du brevet:
**07.05.2008 Bulletin 2008/19**

(21) Numéro de dépôt: **01969915.6**

(22) Date de dépôt: **18.09.2001**

(51) Int Cl.:
***G02B 21/00*** *(2006.01)*

(86) Numéro de dépôt international:
**PCT/FR2001/002890**

(87) Numéro de publication internationale:
**WO 2002/023247 (21.03.2002 Gazette 2002/12)**

(54) **DISPOSITIF DE BALAYAGE OPTIQUE CONFOCAL**

OPTISCHE KONFOKALE ABTASTVORRICHTUNG

CONFOCAL OPTICAL SCANNING DEVICE

(84) Etats contractants désignés:
**AT BE CH CY DE DK ES FI FR GB GR IE IT LI LU
MC NL PT SE TR**

(30) Priorité: **18.09.2000 FR 0011879
23.01.2001 FR 0101138
13.02.2001 FR 0101906
20.02.2001 FR 0102254
22.03.2001 FR 0103860
10.04.2001 FR 0104841
28.06.2001 FR 0108516**

(43) Date de publication de la demande:
**30.07.2003 Bulletin 2003/31**

(73) Titulaire: **Lauer, Vincent
94130 Nogent sur Marne (FR)**

(72) Inventeur: **Lauer, Vincent
94130 Nogent sur Marne (FR)**

(56) Documents cités:
**US-A- 5 162 941          US-A- 6 002 509**

- TIZIANI H J ET AL: "THREE-DIMENSIONAL
  IMAGE SENSING BY CHROMATIC CONFOCAL
  MICROSCOPY" APPLIED OPTICS, OPTICAL
  SOCIETY OF AMERICA,WASHINGTON, US, vol.
  33, no. 10, 1 avril 1994 (1994-04-01), pages
  1838-1843, XP000434202 ISSN: 0003-6935
- LICHTMAN J W: "CONFOCAL MICROSCOPY"
  SCIENTIFIC AMERICAN, SCIENTIFIC AMERICAN
  INC. NEW YORK, US, vol. 271, no. 2, 1 août 1994
  (1994-08-01), pages 30-35, XP000478696 ISSN:
  0036-8733

## Description

L'invention concerne un dispositif de balayage optique confocal utilisé par exemple dans un microscope confocal rapide, et notamment dans un microscope confocal en fluorescence ou en lumière réfléchie, destiné à fonctionner en temps réel.

Les documents suivants décrivent des systèmes de microscopie confocale à balayage par miroirs mobiles en rotation permettant la formation directe de l'image sur un capteur par le biais d'une réflexion supplémentaire sur le miroir mobile, par rapport à des systèmes plus classiques (par exemple US 5,239,178) ou l'image doit être recalculée:

« Microscope for the study of transparent light-scattering objects in incident light » Optics and spectroscopy vol 26 pp 171-172, 1969, Russie, par G.M. Svishchev US 4,170,398 (Koester, 1979)
« Imaging modes for bilateral confocal scanning in microscopy, Journal of Microscopy vol. 171 Pt 1 juillet 1993 pp 17-26 par G.J. Brakenhoff et K. Visscher (désigné ci-après par [Brakenhoff]) WO 0122146 (BJR systems, 2001)

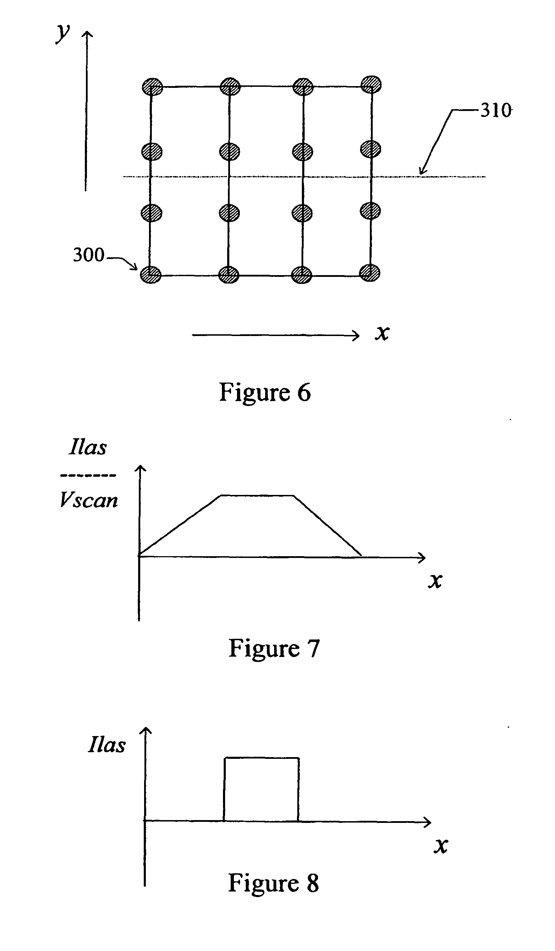

Le document [Brakenhoff] page 23 paragraphe « Multiple-point systems » et figure 8 montre une adaptation de tels systèmes à un balayage multipoint mais précise qu'un balayage suivant deux directions est alors nécessaire.

Ce document décrit un dispositif à balayage optique confocal destiné à permettre une visualisation d'une zone observée d'un objet observé , comprenant :

a) des moyens pour diviser un faisceau d'éclairage en une pluralité de sous-faisceaux d'éclairage,
b) des moyens optiques pour focaliser lesdits sous-faisceaux d'éclairage sur une pluralité de points d'éclairage dans l'objet observé,
c) des moyens optiques pour focaliser en une pluralité de points lumineux d'un premier plan image une pluralité de sous-faisceaux lumineux issus de la pluralité de points d'éclairage,
d) un dispositif de filtrage spatial disposé dans le premier plan image et sélectionnant la lumière atteignant les points lumineux, pour former une pluralité de sous-faisceaux à détecter,
e) des moyens optiques pour focaliser la pluralité de sous-faisceaux à détecter sur une pluralité de points à détecter dans un second plan image, et
f) un miroir monté mobile en rotation réfléchissant :

i) la pluralité de sous-faisceaux d'éclairage dirigés vers l'objet observé, pour que la pluralité de points d'éclairage balaye l'objet observé,
ii) la pluralité de sous-faisceaux lumineux, pour que la pluralité de points lumineux soit fixe dans le premier plan image, et
iii) la pluralité de sous-faisceaux à détecter, pour que la pluralité de points à détecter balaye le second plan image.

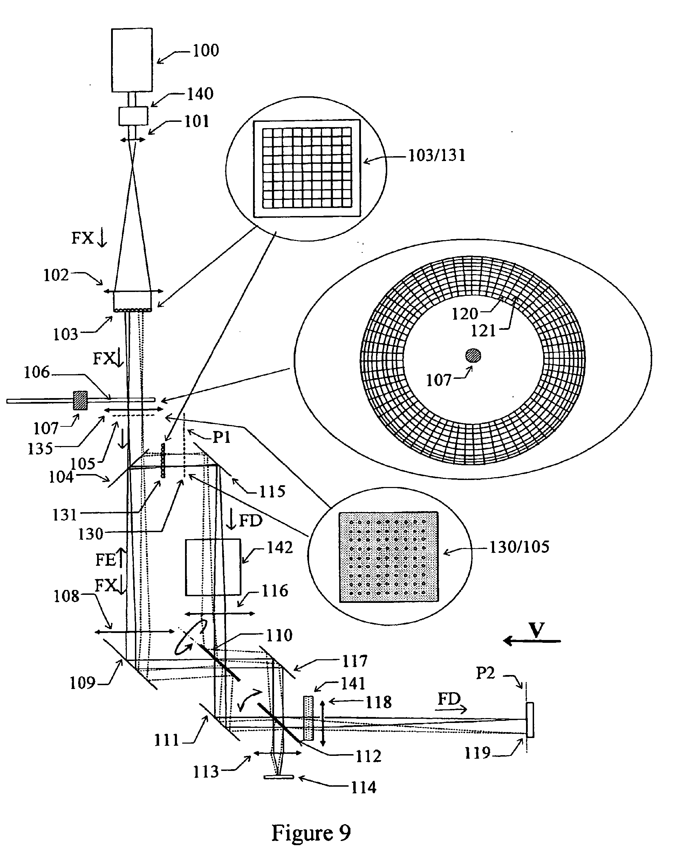

Par ailleurs des systèmes confocaux multipoints à acquisition point par point et reconstruction électronique de l'image sont décrits par exemple dans le document US 6,028,306 [Hayashi]. Dans de tels systèmes, un réseau de points d'éclairage est conjugué à un capteur comprenant une cellule d'acquisition par point d'éclairage. Les points d'éclairage se déplacent dans l'objet observé mais chaque point d'éclairage reste conjugué à un point unique du capteur. Dans de tels systèmes il est nécessaire de faire une pluralité d'acquisitions correspondant à diverses positions du réseau de points d'éclairage et de reconstituer l'image finale à partir de ces acquisitions. Le processus d'acquisition est donc complexe et lent si on le compare à celui décrit par les systèmes de type [Brakenhoff] dans lesquels une image confocale se forme directement sur le capteur et est acquise en une seule fois, sans aucun recalcul. Dans le système décrit par le document [Hayashi] figures 8 et 9 et colonne 15 lignes 52-58 le déplacement des points d'éclairage se fait par un balayage suivant une seule direction.

L'invention vise à réaliser une imagerie confocale multipoints économique et rapide. La vitesse d'acquisition et le prix d'un microscope confocal sont principalement influencés par la caméra (ou dispositif d'acquisition équivalent) utilisée et les miroirs galvanométriques utilisés.

- le document [Brakenhoff] utilise une technique de formation d'image permettant une acquisition en une seule phase. Toutefois ce système ne permet pas une amélioration notable de la vitesse d'imagerie par rapport à des systèmes à image recalculée comme US 5,239,178 : en effet il reste limités par la nécessité d'effectuer un balayage bidimensionnel, technique lente qui ne leur permet pas d'effectuer des acquisitions à la vitesse maximale de la caméra.
Que l'on acquière l'image en une seule fois comme dans [Brakenhoff] ou qu'on l'acquière en plusieurs fois comme par exemple dans US 5,239,178 le nombre d'oscillations nécessaires des miroirs galvanométriques ou dispositifs équivalents reste le facteur limitatif en termes de vitesse. La vitesse d'acquisition reste limitée et pour obtenir une vitesse raisonnable il est nécessaire d'utiliser des miroirs à haute fréquence de résonnance, particulièrement coûteux.

- le document [Hayashi], figures 8 et 9, décrit un balayage monodirectionnel permettant l'utilisation d'un seul miroir de balayage. Toutefois dans [Hayashi] il est nécessaire d'acquérir de nombreuses images avant de pouvoir recalculer l'image finale, et la vitesse d'acquisition reste donc également très en-dessous de la vitesse maximale de la caméra. De ce fait, la vitesse d'acquisition dans [Hayashi] n'est pas notablement améliorée par l'utilisation d'un balayage monodirectionnel : quelle que soir la technique de balayage, le nombre d'image intermédiaires à acquérir reste le même. La vitesse d'acquisition reste limitée et pour obtenir une vitesse d'acquisition raisonnable il est nécessaire d'utiliser une caméra rapide particulièrement coûteuse ou un dispositif équivalent.

Dans le but d'obtenir un balayage confocal multipoints économique et rapide, l'invention consisté en un dispositif à balayage optique confocal destiné à permettre une visualisation d'une zone observée d'un objet observé, comprenant :

a) des moyens pour diviser un faisceau d'éclairage en une pluralité de sous-faisceaux d'éclairage,
b) des moyens optiques pour focaliser lesdits sous-faisceaux d'éclairage sur une pluralité de points d'éclairage dans l'objet observé,
c) des moyens optiques pour focaliser en une pluralité de points lumineux d'un premier plan image une pluralité de sous-faisceaux lumineux issus de la pluralité de points d'éclairage,
d) un dispositif de filtrage spatial disposé dans le premier plan image et sélectionnant la lumière atteignant les points lumineux, pour former une pluralité de sous-faisceaux à détecter,
e) des moyens optiques pour focaliser la pluralité de sous-faisceaux à détecter sur une pluralité de points à détecter dans un second plan image, et
f) au moins un miroir monté mobile en rotation réfléchissant :

i) la pluralité de sous-faisceaux d'éclairage dirigés vers l'objet observé, pour que la pluralité de points d'éclairage balaye l'objet observé,
ii) la pluralité de sous-faisceaux lumineux, pour que la pluralité de points lumineux soit fixe dans le premier plan image, et
iii) la pluralité de sous-faisceaux à détecter, pour que la pluralité de points à détecter balaye le second plan image ;

ledit dispositif étant caractérisé par les faits suivants :

- les moyens pour diviser le faisceau d'éclairage en une pluralité de sous-faisceaux d'éclairage sont adaptés pour que la pluralité de points d'éclairage forme un réseau périodique à deux dimensions,
- ledit miroir monté mobile est adapté pour déplacer chacun des points d'éclairage suivant une ligne droite, et
- ladite ligne droite est non parallèle aux vecteurs de base dudit réseau périodique ($u, v$).

L'invention permet de résoudre le problème de vitesse et d'économie qui n'est résolu ni par [Brakenhoff] ni par [Hayashi].

Le balayage suivant une direction unique pose toutefois certaines difficultés. Dans le cas des systèmes de type [Brakenhoff], la totalité de la zone observée est balayée de manière homogène, l'éclairage moyen de chaque point de la zone observée étant constant. Ceci est essentiel à l'obtention d'une image de la zone observée : si certaines zones ne sont pas éclairées, on n'obtient pas d'image de ces zones. Si l'éclairage est simplement inhomogène, l'image est faussée. Par contre, dans un système de type [Hayashi], l'image est recalculée et d'éventuels suréclairages n'ont pas d'effet sur l'image finale, dans la mesure ou le suréclairage s'applique à la totalité du réseau de points éclairés pour une position donnée de ce réseau.

Dans le système décrit par [Hayashi], la trajectoire des points éclairés est un segment de droite. Il y a aux extrémités de ce segment des points en lesquels la vitesse de déplacement des points d'éclairage s'annule lors du balayage, et qui ont donc tendance à être suréclairés, ce qui ne permet pas l'adaptation aisée de ce système au principe de balayage de [Brakenhoff].

Il y a également dans un système de type [Hayashi] d'autres inhomogénéités d'éclairage. En effet certains points de l'objet se trouvant sur un seul segment (trajectoire d'un point d'éclairage) sont scannés une seule fois, alors que d'autres points seront scannés deux fois ou plus lorsqu'ils se trouvent à l'intersection de deux segments ou plus. Ceci se traduit par des inhomogénéités d'éclairage qui sont sans effet sur un système de type [Hayashi] puisque dans ce système il suffit de retenir comme valeur du point celle obtenue pour une position appropriée des points d'éclairage, les autres positions pouvant être ignorées. Toutefois ces inhomogénéités d'éclairage s'opposent à une utilisation de ce principe de balayage dans un système du type [Brakenhoff].

Ces problèmes de suréclairage sont résolus, suivant un aspect l'invention, en adaptant le système pour que chaque point d'éclairage traverse entièrement la zone observée. De la sorte, le début et la fin de la trajectoire utile du point d'éclairage sont définis par les limites de la zone observée. Ceci évite que les extrémités des segments soient dans la zone observée, ce qui évite les inhomogénéités d'éclairage mentionnées ci-dessus.

Le second plan image peut être réel ou virtuel. Toutefois, le but poursuivi est de focaliser le faisceau à détecter dans un plan image réel qui peut être compris dans le dispositif de balayage ou extérieur à ce dispositif. Ce plan image réel peut par exemple être sur la rétine de l'oeil d'un observateur ou sur le capteur d'une caméra.

Ainsi le dispositif selon l'invention permet de réaliser une imagerie confocale multipoints ayant tous les avantages, en terme de rapidité, des solutions connues comme le microscope à disque de Nipkow.

Toutefois, dans ce cas ou une technique multipoints est utilisée, les points images de chaque point éclairé du plan observé se déplacent simultanément dans le second plan image, et un point du second plan image peut être éclairé successivement par de la lumière provenant de deux points différents de l'objet observé et ayant traversé deux points distincts du premier système de filtrage spatial. L'intensité lumineuse enregistrée en un point du second plan image correspond alors à la superposition de signaux provenant de deux points distincts de l'objet, et ne permet donc pas une reconstitution optimale de l'objet observé.

Suivant une autre caractéristique de l'invention, ce problème est résolu en adaptant le système optique pour que l'image géométrique d'un point géométrique fixe de l'objet, dans le second plan image, soit indépendante de la position dudit au moins un miroir monté mobile autour de ses axes de rotation. En effet, dans ce cas, un point du second plan image n'est éclairé que par la lumière provenant de son image géométrique fixe dans l'objet, ce qui permet la formation d'une image de bonne qualité. De préférence, le système peut être adapté pour que cette image géométrique soit fixe pour des mouvements rotatifs arbitraires du miroir autour de trois axes non coplanaires, y compris si le miroir n'a qu'un axe de rotation. Ceci évite que les vibrations et instabilités du miroir se traduisent par des déplacements de l'image d'un point dans le plan éclairé de l'objet, et donc par des erreurs d'échantillonnage.

Selon une caractéristique de l'invention, le dispositif de balayage comporte des moyens pour modifier les caractéristiques de filtrage spatial du premier système de filtrage spatial. Ceci est facilité par le fait que le premier système de filtrage spatial est statique pendant l'acquisition d'images, contrairement à un disque de Nipkow. Par caractéristiques de filtrage spatial, on entend par exemple le diamètre de chaque trou microscopique ou de chaque miroir microscopique constituant le dispositif de filtrage spatial, ou la répartition de ces éléments sur le dispositif de filtrage spatial. Par exemple le premier système de filtrage spatial peut être réalisé à l'aide d'un modulateur spatial de lumière, consistant en un dispositif matriciel à base de cristaux liquides ferroélectriques. Dans ce cas, la connection électrique de ce dispositif est facilitée par le fait qu'il soit statique. Toutefois, il est généralement plus efficace d'utiliser des moyens mécaniques pour modifier les caractéristiques de filtrage spatial. Selon une caractéristique de l'invention, le premier système de filtrage spatial comporte au moins un élément mobile ou amovible, pour modifier les caractéristiques de filtrage spatial du premier système de filtrage spatial. Par exemple, le premier système de filtrage spatial (130;606) peut être monté de manière amovible, pour être remplacé, manuellement ou au moyen d'un système motorisé, par un autre premier système de filtrage spatial. Le premier système de filtrage spatial peut également comporter plusieurs zones distinctes dont les caractéristiques de filtrage diffèrent les unes des autres, et être monté mobile, pour pouvoir placer l'une ou l'autre de ces zones sur le chemin du faisceau lumineux. Il peut également être composé d'une première plaque absorbante et/ou réfléchissante, pourvue d'une pluralité de trous microscopiques, et d'une deuxième plaque comprenant des parties absorbantes et/ou réfléchissantes et des parties transparentes, ces deux plaques étant placées l'une contre l'autre, et mobiles l'une par rapport à l'autre, pour que les parties absorbantes et/ou réfléchissantes de la deuxième plaque obturent une partie des trous microscopiques de la première plaque, et pour que le déplacement relatif des deux plaques permette de modifier les trous microscopiques laissés libres. Quelle que soit la méthode utilisée, le dispositif selon l'invention permet de modifier les caractéristiques de filtrage spatial, ce qui permet d'optimiser ces caractéristiques en fonction de la longueur d'onde utilisée et/ou de la vitesse d'imagerie ou de la qualité d'imagerie souhaitée. Le déplacement de l'élément mobile ou amovible du système de filtrage spatial requiert dans le cas général une bonne précision mécanique et/ou une procédure d'alignement adéquate: si par exemple le premier système de filtrage spatial comporte des trous microscopiques d'environ 30 microns de large, il est souhaitable que la précision de positionnement soit inférieure à 5 microns. Par contre, le premier système de filtrage spatial étant statique pendant le fonctionnement du microscope, il ne se désaligne pas et ne pose pas de problèmes d'équilibrage, ce qui résout le problème posé par les systèmes à disque de Nipkow: dans le présent dispositif de balayage, il est possible de modifier les caractéristiques de filtrage spatial par un moyen mécanique simple. Dans le cas par exemple ou le dispositif de filtrage spatial est monté de manière amovible et est échangeable manuellement, il n'y a aucune limite au nombre de dispositifs différents qui peuvent être échangés, et il est donc possible d'optimiser de la meilleure manière les caractéristiques de filtrage. Dans le cas ou le dispositif de filtrage spatial comporte plusieurs zones et est mobile, le nombre de zones peut être très supérieur à celui qui est utilisable sur un disque de Nipkow du type décrit par le brevet américain 6,002,509: en effet, ce nombre de zone est proportionnel à la surface totale du dispositif, alors que sur un disque de Nipkow il est proportionnel au rayon du disque, c'est-à-dire à la racine carrée de la surface.

Selon une autre caractéristique de l'invention, les moyens pour diviser le faisceau d'éclairage en une pluralité de sous-faisceaux d'éclairage sont formés par le premier système de filtrage spatial. Cette disposition permet généralement de simplifier le système. En particulier, lorsque le premier système de filtrage spatial est échangeable, cette disposition permet de diminuer considérablement les contraintes d'alignement et de précision mécanique. En effet, dans ce cas, le premier système de filtrage spatial détermine à la fois la position des points éclairés dans l'échantillon ou l'objet et la position des points filtrés pour obtenir le faisceau à détecter. Lorsque le système de filtrage spatial est échangé, la position des points lumineux filtrés correspond automatiquement à la position des points éclairés, sans que des ajustements de haute précision soient nécessaires.

Dans le cas où le premier système de filtrage spatial constitue également les moyens de division du faisceau d'éclairage en une pluralité de sous-faisceaux d'éclairage, et où ce système de filtrage spatial est constitué par une plaque percée de trous microscopiques, le système optique nécessaire pour ramener vers le miroir mobile le faisceau à détecter est relativement complexe. Ce système optique peut être considérablement simplifié, selon une autre caractéristique avantageuse de l'invention, lorsque le dispositif de filtrage spatial est constitué par une plaque pourvue d'une pluralité de miroirs microscopiques, et permettant de renvoyer le faisceau à détecter dans une direction proche de la direction du faisceau incident. Cette solution a en outre pour avantage, si la plaque est transparente, de diminuer la quantité de lumière issue de la réflexion du faisceau d'éclairage sur le système de filtrage spatial et qui se superpose au faisceau à détecter. Dans ce cas, et selon une autre caractéristique de l'invention, le système optique est de préférence adapté pour qu'une seule face du miroir mobile en rotation réfléchisse la pluralité de sous-faisceaux d'éclairage issue du premier système de filtrage spatial vers l'objet à observer, la pluralité de sous-faisceaux lumineux vers le premier système de filtrage spatial et la pluralité de sous-faisceaux à détecter vers le second plan image. Cette adaptation peut être réalisée de manière particulièrement simple, selon une autre caractéristique de l'invention, au moyen d'une lentille unique traversée par la pluralité de sous-faisceaux d'éclairage dirigée du premier système de filtrage spatial vers le miroir monté mobile, par la pluralité de sous-faisceaux lumineux dirigée dudit miroir mobile vers le premier système de filtrage spatial, et par la pluralité de sous-faisceaux à détecter dirigée dudit premier système de filtrage spatial vers ledit miroir monté mobile. Par "lentille" on désigne içi indifféremment, comme dans l'ensemble du texte du brevet, une lentille simple ou une lentille composée, par exemple un achromat ou un ensemble de plusieurs achromats séparés par de l'air.

Un autre but de l'invention consiste à rendre possible la suppression de la lumière issue de la réflexion du faisceau d'éclairage sur le système de filtrage spatial et qui se superpose au faisceau à détecter, et ceci sans les difficultés liées à l'utilisation d'un disque de Nipkow. Par exemple, dans un microscope à disque de Nipkow, la suppression de la lumière issue de la réflexion du faisceau d'éclairage sur le système de filtrage spatial nécessite l'utilisation de deux parties distinctes du disque traversées respectivement par le faisceau d'éclairage et le faisceau lumineux réfléchi par l'échantillon, ce qui pose des problèmes considérables de réglage et de stabilité du disque de Nipkow.

Selon une caractéristique de l'invention permettant de résoudre le problème ci-dessus, tout en utilisant dans sa totalité l'ouverture de l'objectif, tant pour le faisceau d'éclairage que pour le faisceau lumineux revenant de l'objet, le système optique comprend également une séparatrice pour séparer la pluralité de sous-faisceaux d'éclairage dirigée vers l'objet à observer, du faisceau lumineux provenant de l'objet à observer vers le premier système de filtrage spatial, afin que le premier système de filtrage spatial ne soit pas atteint par le faisceau d'éclairage. Le premier système de filtrage spatial n'étant pas atteint par le faisceau d'éclairage, la « stray light » est supprimée. Mais, du fait que le premier système de filtrage spatial est fixe, ce résultat est obtenu sans les problèmes d'instabilité liés au disque de Nipkow. Afin d'éviter totalement les réflexions de lumière parasite sur le premier système de filtrage spatial, le premier système de filtrage spatial est constitué de préférence par une plaque absorbante et/ou réfléchissante portant des trous microscopiques traversés dans un seul sens par la lumière. Afin d'éviter totalement les réflexions de lumière parasite sur les moyens pour diviser le faisceau d'éclairage en sous-faisceaux, ces moyens diviseurs du faisceau d'éclairage peuvent de préférence être, dans le cas d'un éclairage en lumière non cohérente, une plaque pourvue d'une pluralité de trous microscopiques traversés dans un seul sens par le faisceau d'éclairage. Dans le cas d'un éclairage en lumière cohérente, et afin de ne pas diminuer l'intensité utile du faisceau, il est préférable d'utiliser un support comportant une pluralité de microlentilles. Dans les deux cas, le fonctionnement en transmission et l'utilisation d'une séparatrice permettent d'éviter les problèmes liés à la lumière parasite.

Selon une autre caractéristique de l'invention, les moyens pour diviser le faisceau d'éclairage en une pluralité de sous-faisceaux comprennent un support comportant une pluralité de micro-lentilles, et dans lequel le premier système de filtrage spatial comporte une pluralité de trous microscopiques traversés par la pluralité de sous-faisceaux d'éclairage. Dans ce cas, et selon une caractéristique de l'invention, le support comportant une pluralité de micro-lentilles, et le premier système de filtrage spatial, sont solidaires l'un de l'autre et constituent un ensemble de division et de filtrage, monté de manière amovible pour être remplacé par un autre ensemble de division et de filtrage. L'avantage de cette solution est que même dans le cas ou une séparatrice est utilisée, il n'est pas nécessaire d'intégrer cette séparatrice à l'ensemble amovible de division et de filtrage.

Lorsqu'une seule face de réflexion d'un miroir est utilisée, il est nécessaire, afin d'éviter les pertes d'intensité lumineuses par des dispositifs polarisants permettant de séparer les différents faisceaux, d'augmenter la taille du miroir monté mobile de manière à séparer spatialement certains des faisceaux. L'augmentation de taille du miroir se traduit par une diminution de sa fréquence de résonance, qui peut être gênante pour effectuer un balayage propre. De plus, lorsque le premier système de filtrage spatial fonctionne en réflexion, le système optique nécessaire pour utiliser une seule face d'un miroir est complexe. Afin d'optimiser la fréquence de résonance du miroir monté mobile, et afin de simplifier le système optique, le miroir monté mobile peut être un miroir plan comprenant une première face de réflexion et une deuxième face de réflexion, la première face de réflexion étant destinée à défléchir le faisceau d'éclairage issu de la source lumineuse et le faisceau lumineux émis par le point éclairé de l'objet, et la deuxième face de réflexion étant destinée à défléchir le faisceau à détecter renvoyé par le premier système de filtrage spatial et le système optique. Selon une autre caractéristique de l'invention, les moyens pour diviser le faisceau d'éclairage en une pluralité de sous-faisceaux d'éclairage, sont adaptés pour que la pluralité de points d'éclairage forme un réseau périodique à deux dimensions. De préférence ce réseau peut être à maille hexagonale. Grâce à ces dispositions, le dispositif selon l'invention permet de minimiser les pertes d'intensité lumineuse et d'obtenir des caractéristiques d'imagerie constantes, indépendantes du point considéré.

Dans ce cas, et afin d'obtenir des caractéristiques d'imagerie constante, il est possible de commander ledit au moins un miroir mobile de manière à ce que chaque point éclairé effectue un balayage bidimensionnel de l'objet. Cependant, cette solution nécessite des miroirs mobiles performants à haute fréquence de résonance, et une solution plus économique est que chaque point balaye une seule ligne. Si cette ligne est courbe, par exemple si chaque point balaye un cercle, l'image obtenue tend à présenter des inhomogénéités d'éclairage dans certaines directions. Selon une version de l'invention, une image de bonne qualité bénéficiant d'un éclairage homogène est obtenue en commandant ledit au moins un miroir monté mobile en rotation de manière à déplacer chacun desdits points éclairés suivant une ligne droite non parallèle à la direction des vecteurs directeurs du réseau périodique. Cette solution permet en particulier d'utiliser un seul miroir monté mobile en rotation.

Lorsque ledit au moins un miroir mobile tourne autour de son ou ses axes, chaque point éclairé se déplace dans l'objet, et l'ensemble de la zone éclairée se déplace donc de la même manière, l'ensemble des points éclairés pendant le déplacement de cette zone définissant une zone éclairée étendue. Les points de l'objet situés au centre de la zone éclairée étendue sont éclairés plus souvent que ceux situés à la périphérie de cette zone, et l'éclairage n'est donc pas homogène dans la zone éclairée étendue, ce qui rend difficile l'obtention d'une image de bonne qualité d'une zone observée fixe. Selon une caractéristique de l'invention, la zone éclairée peut être rendue fixe au moyen d'un diaphragme placé dans un plan image traversé par le faisceau d'éclairage provenant dudit miroir mobile et dirigé vers l'objet observé. Ce diaphragme permet de limiter la zone éclairée à la partie centrale de la zone éclairée étendue qui serait obtenue en l'abscence de diaphragme. Toutefois, une partie du faisceau d'éclairage étant arrêtée par le diaphragme, cette solution diminue l'intensité utile du faisceau d'éclairage.

Selon une autre caractéristique de l'invention, permettant de résoudre ce problème, le dispositif comprend des moyens pour déplacer une zone illuminée par le faisceau d'éclairage sur les moyens pour diviser le faisceau d'éclairage en sous-faisceaux. Les moyens pour diviser le faisceau d'éclairage en sous-faisceaux sont par exemple une pluralité de microlentilles placées dans le plan de division, une plaque transparente et/ou réfléchissante pourvue d'une pluralité de trous microscopiques et placée dans le plan de division, ou une plaque transparente pourvue d'une pluralité de miroirs microscopiques et placée dans le plan de division. Le déplacement de la zone éclairée dans le plan de division permet modifier la zone éclairée dans l'objet en modifiant les sous-faisceaux constituant la pluralité de sous-faisceaux, mais sans modifier les caractéristiques du déplacement individuel de chaque point éclairé dans l'objet. Selon une caractéristique de l'invention, les moyens pour déplacer la zone illuminée par le faisceau d'éclairage sur les moyens pour diviser le faisceau d'éclairage en sous-faisceaux sont également adaptés pour que la zone éclairée dans l'objet observé reste fixe lorsque ledit au moins un miroir monté mobile en rotation tourne. Ceci permet de conserver une zone éclairée fixe, sans la perte d'intensité liée à l'utilisation d'un diaphragme. Le moyen pour déplacer la zone éclairée dans le plan de division peut par exemple comporter un dispositif accousto-optique de déflexion d'un faisceau, ou un miroir mobile indépendant de celui utilisé pour déplacer les points éclairés dans l'objet. Dans ce cas, le miroir mobile indépendant ou le dispositif accousto-optique doit être synchronisé avec ledit au moins un miroir monté mobile. Selon une caractéristique de l'invention, les moyens pour déplacer la zone illuminée par le faisceau d'éclairage dans le plan de division comprennent ledit au moins un miroir monté mobile en rotation, et le système optique est adapté pour que le faisceau d'éclairage soit réfléchi, avant de parvenir au plan de division, par ledit au moins un miroir monté mobile en rotation. La réflexion étant effectuée sur ledit miroir mobile, il n'est pas nécessaire d'effectuer une quelconque synchronisation. De plus cette solution est généralement plus économique. Toutefois, dans le cas ou le premier dispositif de filtrage spatial est une pluralité de trous microscopiques traversés dans un seul sens par le faisceau lumineux, cette solution implique l'utilisation de plusieurs séparatrices supplémentaires, et il est techniquement préférable d'utiliser un miroir mobile indépendant pour déplacer la zone éclairée dans le plan de division. D'éventuels défauts de synchronisation de ce miroir n'affectent que les bords de la zone éclairée et peuvent être supprimés à l'aide d'un diaphragme placé dans un plan image traversé par le faisceau d'éclairage provenant dudit miroir mobile et dirigé vers l'objet observé.

Lorsque les miroirs mobiles tournent, la vitesse de déplacement des points d'éclairage dans le plan observé varie. Ces variations de vitesse génèrent des suréclairages ponctuels. Par exemple, lorsque le point d'éclairage se déplace sur un segment de droite qu'il parcourt alternativement dans un sens et dans l'autre, sa vitesse s'annule aux deux extrémités du segment, et le point de l'objet observé qui est éclairé lorsque le point d'éclairage atteint une extrémité du segment se trouve donc suréclairé, en moyenne temporelle, par rapport à des points voisins. Si le point d'éclairage parcourt successivement plusieurs segments de droite distincts, le même problème existe. D'une manière générale, toute variation de vitesse du point d'éclairage génère des inhomogénéités d'éclairage. Lorsque ledit miroir mobile tourne, la position d'un point d'éclairage dans l'objet est l'image géométrique mobile d'un point fixe correspondant sur le premier dispositif de filtrage spatial. Lorsque un point d'éclairage est éteint (obturé) par différents moyens, il n'existe plus physiquement, mais le mouvement qu'il aurait s'il n'était pas éteint peut être caractérisé par le mouvement de l'image géométrique d'un point géométrique fixe du dispositif de filtrage spatial. Pour résoudre le problème des suréclairages ponctuels, on sera amené à éteindre, par divers moyens, le faisceau d'éclairage, lorsque la vitesse de déplacement de l'image géométrique d'un point géométrique fixe du dispositif de filtrage spatial atteindra sa valeur minimale (c'est-à-dire quand la vitesse de déplacement des points d'éclairage, s'ils n'ont pas encore été éteints, atteint sa valeur minimale). Selon une caractéristique de l'invention, le dispositif de balayage comporte donc des moyens pour supprimer le faisceau d'éclairage, ou la pluralité de sous-faisceaux d'éclairage, avant qu'il ne parvienne à l'objet observé, lorsque la vitesse de déplacement de l'image géométrique, dans l'objet observé, d'un point géométrique fixe du premier plan image, atteint sa valeur minimale.

Selon une caractéristique de l'invention, les moyens pour supprimer le faisceau d'éclairage ou la pluralité de sous-faisceaux d'éclairage peuvent être formés d'un obturateur permettant d'éteindre le faisceau d'éclairage lorsque la vitesse de déplacement des points d'éclairage est minimale. Toutefois, l'extinction du faisceau doit intervenir à un instant très précis afin que la trajectoire de chaque point d'éclairage se termine en un point parfaitement défini, à défaut de quoi des inhomogénéités d'éclairage sont également générées. Cette synchronisation est difficile.

Selon une autre caractéristique de l'invention visant à résoudre le problème des inhomogénéités d'éclairage en limitant les problèmes de synchronisation, les moyens pour supprimer le faisceau d'éclairage ou la pluralité de sous-faisceaux d'éclairage sont formés par un dispositif de limitation disposé pour être atteint par le faisceau d'éclairage ou la pluralité de sous-faisceaux d'éclairage, ledit dispositif de limitation comprenant des moyens pour supprimer la partie du faisceau d'éclairage ou de la pluralité de sous-faisceaux d'éclairage qui n'atteint pas une surface de sélection, et le dispositif de limitation, le système optique, et le mouvement du miroir monté mobile en rotation sont adaptés pour que la zone éclairée par le faisceau d'éclairage sur le dispositif de limitation se trouve en-dehors de la surface de sélection lorsque la vitesse de déplacement de l'image géométrique, dans l'objet observé, d'un point géométrique fixe du premier plan image, atteint sa valeur minimale. Dans ces conditions, le faisceau d'éclairage est arrêté lorsque la vitesse de déplacement des points d'éclairage serait normalement minimale, et le suréclairage des points correspondants de l'objet observé est évité. Lorsque cette solution est appliquée à un système dans lequel chaque point d'éclairage se déplace sur une droite, elle permet également à chaque point d'éclairage de traverser entièrement la zone observée, de sorte que le début et la fin de sa trajectoire sont définis par les limites de la zone observée sans qu'une synchronisation précise soit nécessaire.

Les caractéristiques du dispositif de limitation diffèrent selon que le dispositif de balayage comporte ou non des moyens pour déplacer la zone illuminée sur les mouyns pour diviser le faisceau d'éclairage en une pluralité de sous-faisceaux. D'une manière générale, le dispositif de limitation doit être placé dans une partie du système dans laquelle la zone éclairée par le faisceau d'éclairage se déplace. Selon une caractéristique de l'invention, adaptée en particulier au cas ou le dispositif de balayage comporte des moyens pour déplacer la zone illuminée sur les moyens pour diviser le faisceau d'éclairage en une pluralité de sous-faisceaux, le dispositif de limitation est disposé pour être atteint par le faisceau d'éclairage ou la pluralité de sous-faisceaux d'éclairage avant que le faisceau d'éclairage ou la pluralité de sous-faisceaux d'éclairage ne soit réfléchi, en direction de l'objet observé et en provenance des moyens pour diviser le faisceau d'éclairage en une pluralité de sous-faisceaux, par ledit miroir monté mobile. Dans ce cas, le dispositif de limitation peut être placé dans un plan conjugué au plan observé, de manière à ce que la partie observée du plan observé soit délimitée par des contours nets. Il peut être placé dans le plan ou se trouvent les moyens pour diviser le faisceau d'éclairage en une pluralité de sous-faisceaux, qui dans le cas ou des microlentilles sont utilisées n'est pas conjugué au plan observé, ce qui dans ce cas particulier ne dégrade pas la netteté des bords de l'image. Le dispositif de limitation peut par exemple être un diaphragme, auquel cas la surface de limitation est l'ouverture de ce diaphragme. Si les moyens pour diviser le faisceau d'éclairage en une pluralité de sous-faisceaux d'éclairage sont constitués par une plaque absorbante et/ou réfléchissante pourvue d'une pluralité de trous microscopiques, le dispositif de limitation peut être formée par une partie de cette plaque qui ne comporte pas de trous microscopiques, ce qui évite d'introduire un plan image ou un diaphragme supplémentaire. Si les moyens pour diviser le faisceau d'éclairage en une pluralité de sous-faisceaux d'éclairage sont constitués par une plaque transparente pourvue d'une pluralité de miroirs microscopiques, le dispositif de limitation peut être formée par une partie de cette plaque qui ne comporte pas de miroirs microscopiques, ce qui évite également l'introduction d'un diaphragme. Si les moyens pour diviser le faisceau d'éclairage sont constitués d'une pluralité de micro-lentilles plaçées dans un plan de division, le dispositif de limitation peut être un diaphragme placé dans le même plan ou dans un plan de focalisation des sous-faisceaux issus des microlentilles.

Selon une caractéristique de l'invention, adaptée en particulier au cas ou le dispositif de balayage ne comporte pas de moyens pour déplacer la zone illuminée sur les moyens pour diviser le faisceau d'éclairage en une pluralité de sous-faisceaux, le dispositif de limitation est placé à proximité d'un plan conjugué au plan observé et traversé par le faisceau d'éclairage après qu'il ait été réfléchi, en provenance des moyens pour diviser le faisceau en sous-faisceaux et en direction de l'objet observé, par le miroir monté mobile en rotation. Le dispositif de limitation peut alors être un diaphragme et la surface de sélection est alors l'ouverture de ce diaphragme. Comme précédemment, dans le cas ou chaque point d'éclairage se déplace sur une droite, chaque point d'éclairage traverse entièrement la zone observée. Par contre, cette solution peut se traduire par une perte d'intensité lumineuse notable.

Le dispositif de balayage peut être considérablement simplifié lorsque le premier système de filtrage spatial comporte une plaque non absorbante pourvue d'au moins un miroir microscopique réfléchissant , et le miroir monté mobile comporte une face de réflexion qui réfléchit le faisceau d'éclairage dirigé vers l'objet à observer , le faisceau lumineux provenant de l'objet à observer et dirigé vers le premier système de filtrage spatial, et le faisceau à détecter provenant du système de filtrage spatial. Cette solution limite considérablement le nombre de composants du système. Toutefois, elle ne permet pas de supprimer totalement les interférences avec la lumière réfléchie ("stray light").

Lorsqu'une seule face de réflexion d'un miroir est utilisée, il est nécessaire, afin d'éviter les pertes d'intensité lumineuses par des dispositifs polarisants permettant de séparer les différents faisceaux, d'augmenter la taille du miroir monté mobile de manière à séparer spatialement certains des faisceaux. L'augmentation de taille du miroir se traduit par une diminution de sa fréquence de résonance, qui peut être gênante pour effectuer un balayage propre. De plus, lorsque le premier système de filtrage spatial fonctionne en réflexion, le système optique nécessaire pour utiliser une seule face d'un miroir est complexe. Afin d'optimiser la fréquence de résonance du miroir monté mobile, et afin de simplifier le système optique, le miroir monté mobile peut être un miroir plan comprenant une première face de réflexion et une deuxième face de réflexion, la première face de réflexion étant destinée à défléchir le faisceau d'éclairage issu de la source lumineuse et le faisceau lumineux émis par le point éclairé de l'objet, et la deuxième face de réflexion étant destinée à défléchir le faisceau à détecter renvoyé par le premier système de filtrage spatial et le système optique. Cette configuration est particulièrement adaptée à l'utilisation d'un premier système de filtrage spatial comporte une plaque absorbante et/ou réfléchissante pourvue d'au moins un trou microscopique traversé dans un seul sens par le faisceau lumineux. En effet cette solution permet d'éviter les problèmes de "stray light", et l'utilisation de deux faces opposées d'un miroir évite de resuperposer le faisceau filtré dépourvu de "stray light" au faisceau d'éclairage.

D'autres caractéristiques et avantages de l'invention apparaîtront au cours de la description qui va suivre de plusieurs de ses formes de réalisation, données à titre d'exemples non limitatifs, en regard des dessins joints.

Sur les dessins :

- la figure 1 représente un mode de réalisation utilisant un éclairage laser multipoints et un réseau de trous microscopiques,
- la figure 2 représente un réseau de trous microscopiques utilisé dans divers modes de réalisation,
- La figure 3 représente en vue de coté un ensemble de miroirs également représentés sur la figure 1,
- la figure 4 représente un réseau de lentilles utilisées pour l'éclairage de l'échantillon,
- la figure 5 représente l'ensemble des points éclairés dans l'objet observé, et la trajectoire de ces points,
- les figures 6 à 8 illustrent la commande appliquée à un atténuateur de faisceau en fonction de la position et de la vitesse de déplacement de l'image d'un trou microscopique sur une caméra,
- la figure 9 représente un mode de réalisation du dispositif à balayage optique confocal conforme à l'invention et dans lequel on utilise un éclairage laser multipoints et un réseaux de trous microscopiques,
- la figure 10 représente un réseau de lentilles et un réseau de trous microscopiques pouvant être utilisés pour filtrer le faisceau lumineux provenant de l'objet.
- la figure 11 représente un mode de réalisation utilisant un éclairage incohérent multipoints et deux réseaux de trous microscopiques,
- la figure 12 représente un cube intégrant deux réseaux de trous microscopiques et un miroir dichroïque,
- la figure 13 représente un mode de réalisation utilisant un éclairage incohérent multipoints et un seul réseau de trous microscopiques,
- la figure 14 représente les points éclairés dans l'objet, et la trajectoire d'un de ces points, un seul miroir galvanométrique étant utilisé,
- la figure 15 représente un mode de réalisation utilisant un éclairage incohérent et un réseau de miroirs microscopiques, et dans lequel le faisceau d'éclairage subit une première déflexion avant de parvenir au réseau de miroirs microscopiques formant le premier système de filtrage spatial,
- la figure 16 représente un réseau de miroirs microscopiques utilisés dans le mode de réalisation de la figure 15,
- la figure 17 représente une version améliorée du mode de réalisation de la figure 15, dans laquelle un faisceau non polarisé peut être utilisé sans perte d'énergie lumineuse,
- la figure 18 représente le déplacement d'une zone éclairée sur une plaque transparente pourvue d'un réseau de miroirs microscopiques et utilisée comme moyen pour séparer le faisceau d'éclairage en sous-faisceaux, par exemple dans le mode de réalisation de la figure 17,

- la figure 19 montre la trajectoire d'un point d'éclairage dans la zone observée de l'objet,
- la figure 20 représente une partie d'un réseau de points réfléchissants à maille hexagonale, et indique la position de ce réseau par rapport au sens de déplacement de la zone illuminée sur le réseau,
- la figure 21 représente une version à deux miroirs galvanométriques du mode de réalisation de la figure 17,
- la figure 22 représente un mode de réalisation en éclairage laser multipoint, dans lequel le faisceau d'éclairage subit une première déflexion avant de parvenir au réseau de microlentilles,
- la figure 23 montre un mode de réalisation simplifié en éclairage laser, et:

- la figure 24 montre un mode de réalisation similaire à celui de la figure 23, mais en éclairage lumière blanche.
- la figure 25 représente le déplacement d'une zone éclairée sur un diaphragme, utilisé par exemple dans le mode de réalisation de la figure 24,
- les figures 26 et 27 représente deux plaques pourvues de trous microscopiques, l'ensemble de ces deux plaques placées l'une contre l'autre formant un dispositif de filtrage spatial modifiable.
- la figure 28 montre une plaque munie d'une pluralité de réseaux de trous microscopiques et mobile suivant une direction, permettant de modifier les caractéristiques de filtrage spatial.
- la figure 29 montre une plaque munie d'une pluralité de réseaux de trous microscopiques et mobile suivant deux direction, permettant de modifier les caractéristiques de filtrage spatial.
- la figure 30 montre un ensemble de cubes incluant chacun une séparatrice et deux dispositifs de filtrage spatial, l'ensemble étant mobile suivant une direction pour pouvoir changer le cube utilisé dans le dispositif.

**Mode de réalisation multipoint laser**.

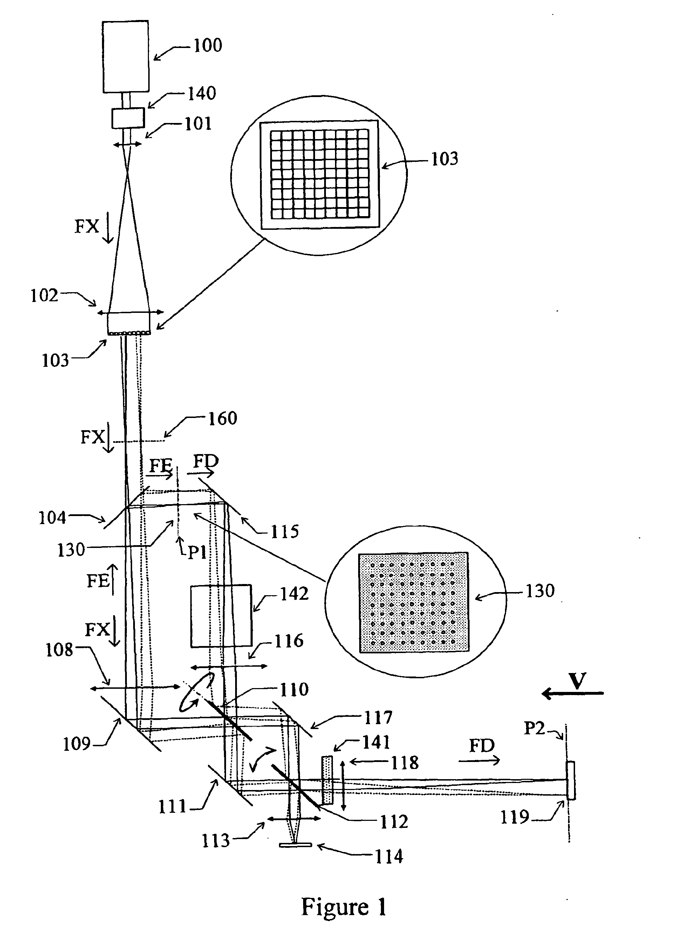

Ce mode de réalisation est représenté par la figure 1. Il constitue un mode de réalisation performant en termes de qualité d'image et de rapidité. En effet :

- on utilise un éclairage laser multipoints, ce qui permet, en particulier sur des zones de petites dimensions, d'utiliser un éclairage intense sans saturer l'échantillon.
- on utilise un réseau de trous microscopiques, qui filtre le faisceau et limite les difficultés liées à d'éventuelles réflexions parasites.

Le faisceau d'éclairage FX issu d'un laser 100 traverse un atténuateur de faisceau 140 qui peut par exemple être électro-optique ou acousto-optique. Il traverse ensuite un élargisseur de faisceau comportant par exemple les lentilles 101 et 102. Le faisceau d'éclairage FX traverse ensuite des moyens pour diviser ledit faisceau d'éclairage FX en une pluralité de sous-faisceaux d'éclairage. Ces moyens diviseurs sont formés par un réseau de microlentilles 103.

On a représenté en traits pleins le sous-faisceau issu d'une de ces microlentilles et en pointillés le sous-faisceau issu d'une autre microlentille. On a indiqué par des flèches les directions du faisceau d'éclairage ou d'excitation FX et du faisceau lumineux réémis par l'objet fluorescent FE.

La pluralité de sous-faisceaux d'éclairage issue du réseau de microlentilles 103 traverse ensuite le miroir dichroïque 104 et la lentille de tube 108 puis est réfléchie par un miroir 109. Ces sous-faisceaux d'éclairage sont ensuite réfléchis par un miroir galvanométrique 110 mobile en rotation autour d'un axe situé dans l'intersection du plan de la figure et du plan du miroir 110, par un miroir 111, et par un miroir galvanométrique 112 mobile en rotation autour d'un axe orthogonal au plan de la figure. Ils traversent l'objectif de microscope 113 et parviennent à l'objet observé 114. L'objectif 113 est un objectif formant à l'infini une image de l'échantillon observé. Le point de focalisation de chaque sous-faisceau d'éclairage issu du réseau de microlentilles 103 est situé dans un plan observé de l'objet observé 114.

De préférence, le plan focal image de l'objectif 113 est dans le plan focal objet (dans le sens objectif vers lentille 108) de la lentille 108 et le réseau de trous 160 est dans un plan focal de la lentille 108. Ceci permet de maximiser l'ouverture utile de chaque sous-faisceau.

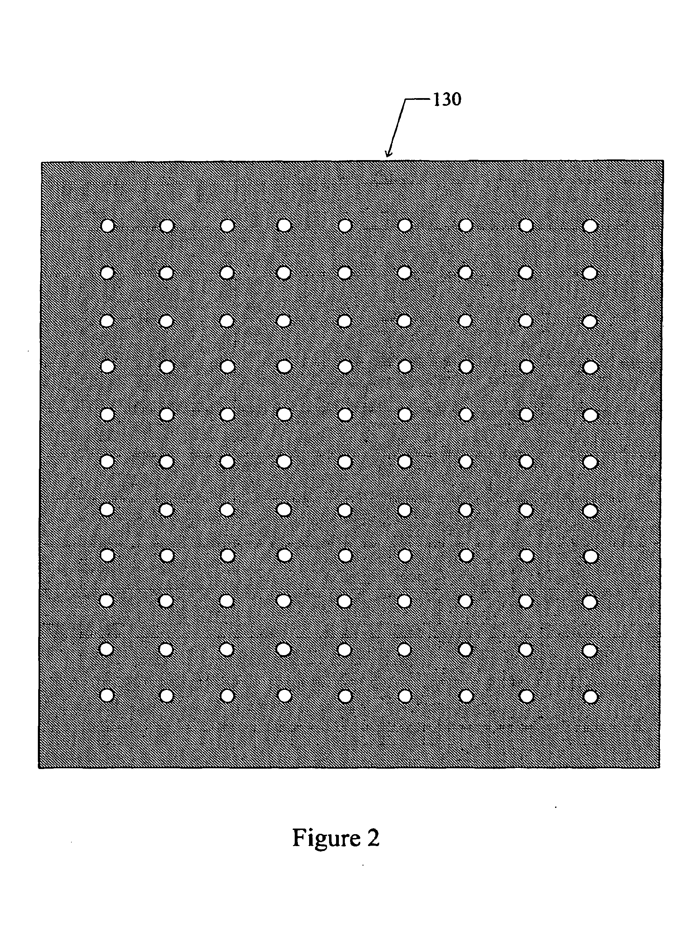

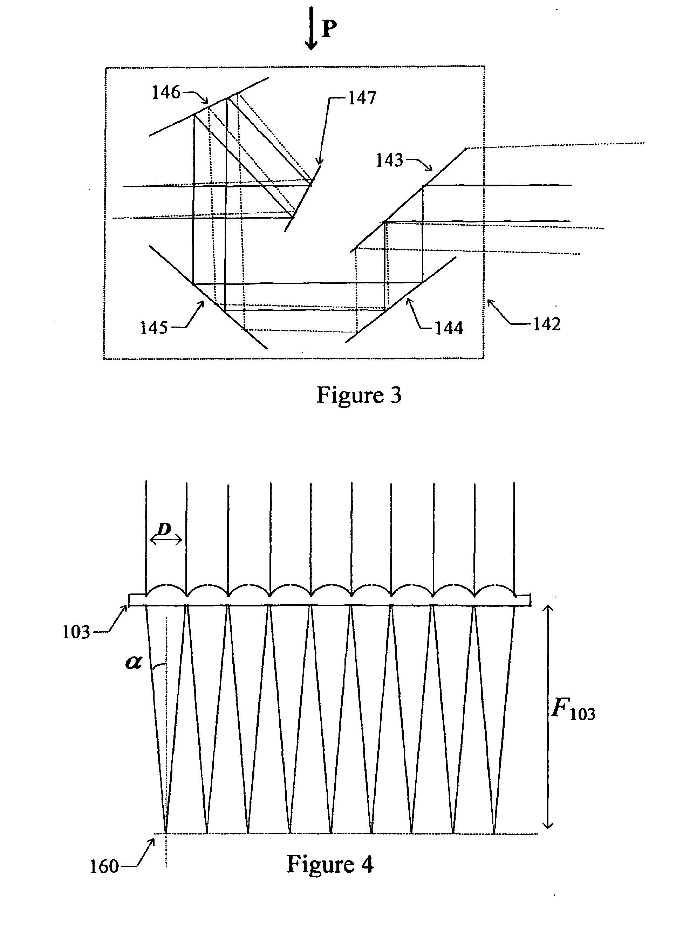

L'objet éclairé ou plus exactement la pluralité de points éclairés de l'objet émettent en retour une pluralité de sous-faisceaux lumineux non cohérents. Ces sous-faisceaux lumineux traversent l'objectif 113, sont réfléchis par le miroir galvanométrique 112, le miroir 111, le miroir galvanométrique 110, le miroir 109. Us traversent la lentille de tube 108, sont réfléchis par le miroir dichroïque 104, puis traversent le réseau de trous microscopiques 130 situé dans le premier plan image P1 et formant le premier système de filtrage spatial. Le réseau de trous microscopiques 130 est par exemple du type représenté schématiquement sur la figure 2. Ce réseau 130 peut être constitué par dépôt d'une couche réfléchissante sur une vitre transparente par une méthode de type "lithographique", les trous étant alors des interruptions de la couche réfléchissante. Dans ce cas un filtre neutre placé en sortie du laser peut être utilisé pour atténuer les effets de retour de la lumière laser. Le réseau de trous microscopiques peut également être constitué d'une plaque métallique dépolie dans laquelle les trous sont percés au moyen d'un laser. Cette solution évite les problèmes de retour du faisceau laser. Le pas (distance entre les centres de deux trous adjacents) du réseau de trous microscopiques 130 est identique au pas du réseau de microlentilles 103 (distance entre les centres de deux microlentilles adjacentes). Les réseaux 103 et 130 sont positionnés de sorte que chaque trou du réseau 130 soit l'image d'un point de l'objet sur lequel est focalisé l'un des sous-faisceaux d'éclairage issu d'une microlentille du réseau 103. Ceci implique que le réseau 130 est dans un plan focal de la lentille de tube 108, et que le plan de focalisation 160 des sous-faisceaux d'éclairage issus du réseau de microlentilles 103 est également dans un plan focal de la lentille de tube 108. Les sous-faisceaux lumineux FE traversent le réseau 130 pour obtenir les sous-faisceaux à détecter FD qui sont ensuite réfléchis par le miroir 115. Les sous-faisceaux à détecter FD sont ensuite réfléchis successivement par les miroirs 143, 144, 145, 146, 147 constituant l'ensemble 142 représenté par un bloc sur la figure 1, qui sont montrés sur la figure 3 en vue suivant la direction V indiquée sur la figure 1. L'ensemble 142 sert à inverser l'angle des sous-faisceaux à détecter par rapport à un plan contenant l'axe optique et situé dans le plan de la figure 1. La direction P indiquée sur la figure 3 montre la direction d'observation suivant laquelle est réalisée la figure 1. Les sous-faisceaux à détecter traversent ensuite la lentille 116 identique à la lentille de tube 108, et dont le plan focal objet est sur le réseau de trous microscopiques 130. Ils sont réfléchis par la seconde face du miroir galvanométrique 110, par le miroir 117, par la seconde face du miroir galvanométrique 112. Ils traversent le filtre monochromateur 141. Ils traversent ensuite la lentille 118 qui forme dans son plan focal image l'image du réseau 130, et donc de l'échantillon observé. Ils parviennent au plan focal image de la lentille 118, qui constitue le second plan image P2, en une pluralité de points à détecter. Un capteur CCD 119 peut être placé dans ce plan, qui correspond au second plan image P2, toutefois il est également possible d'observer directement l'image formée dans ce plan, à l'aide d'un oculaire. La distance focale de la lentille 116 doit être exactement égale à la distance focale de la lentille 108, et pour permettre un ajustement précis les lentilles 116 et 108 peuvent être remplaçées par des doublets de lentilles, le réglage de la distance interlentilles d'un doublet permettant un ajustement de la distance focale du doublet.

L'inversion de l'angle des sous-faisceaux à détecter qui est réalisée par l'ensemble de miroirs 142 permet à l'image géométrique, dans le plan P2, d'un point géométrique fixe de l'objet observé, d'être un point géométrique fixe. Du fait qu'un réseau de points d'éclairage est utilisé, cette condition est indispensable à la formation d'une image de bonne qualité.

La figure 4 montre le principe de la focalisation du faisceau laser par le réseau de microlentilles 103. La valeur de l'angle $\alpha$ indiqué sur cette figure est de préférence $\alpha = ouv\dfrac{F_{113}}{F_{108}}$. La largeur de la tache d'Airy produite dans le plan 160 est alors $L_{160} = 1{,}22\dfrac{\lambda_{las}}{ouv}\dfrac{F_{108}}{F_{113}}$ ou $F_{108}$ est la distance focale de la lentille 108, $F_{113}$ est la distance focale de l'objectif 113, *ouv* est l'ouverture numérique de l'objectif 113, $\lambda_{las}$ est la longueur d'onde du laser. La distance D entre deux microlentilles adjacentes est de préférence au moins 10 fois la largeur de chaque trou. Les microlentilles du réseau 103 sont des microlentilles sphériques limitées par des carrés et adjacentes les unes aux autres. La largeur de chaque microlentille (coté du carré la limitant ou distance entre les centres de deux microlentilles adjacentes) est égale à la distance D entre deux trous microscopiques adjacents du réseau 130, et le diamètre $L_{130}$ d'un trou microscopique est égal par exemple à la largeur de la tache d'Airy produite dans le plan 160, ou à la moitié de cette largeur. La distance focale $F_{103}$ de chaque microlentille du réseau de microlentilles 103 et sa largeur D sont en outre liés par la relation

$$\frac{D}{2F_{103}} = \alpha = ouv\frac{F_{113}}{F_{108}}\text{, soit } F_{103} = \frac{D}{2}\frac{F_{108}}{F_{113}}\frac{1}{ouv}\text{· Par exemple on peut avoir:}$$

$F_{113}$ = 2 mm

*ouv* = 1,25

$F_{108}$ = 200 mm

D = 2 mm

$\lambda_{las}$ = 488 nm (laser argon)

$F_{103}$ = 80 mm

$L_{130}$ = 23 $\mu$m

Pour une résolution maximale, avec des trous microscopiques dont le diamètre est suffisamment inférieur à la tache d'Airy, et pour permettre dans des conditions optimales une déconvolution ultérieure de l'image confocale, le pas $P_{119}$ d'échantillonnage sur le capteur CCD (distance entre les centres de deux pixels adjacents) doit vérifier:

$$P_{119} = \frac{1}{4ouv} \frac{F_{118}}{F_{113}} \frac{\lambda_{las} \lambda_{fluo}}{\lambda_{las} + \lambda_{fluo}}$$

soit

$$F_{118} = 4ouv P_{119} F_{113} \frac{\lambda_{las} + \lambda_{fluo}}{\lambda_{las} \lambda_{fluo}}$$

Par exemple avec $P_{119}$ = 12 $\mu$m et toujours dans le même exemple de dimensionnement on obtient:

$F_{118}$ = 477 mm

Pour une résolution maximale mais sans déconvolution ultérieure de l'image confocale on peut se contenter

de: $F_{118} = \frac{4}{2\sqrt{2}} ouv P_{119} F_{113} \frac{\lambda_{las} + \lambda_{fluo}}{\lambda_{las} \lambda_{fluo}}$ soit $F_{118}$ = 168 mm

Avec des trous microscopiques dont le diamètre est d'une tache d'airy on peut se contenter de:

$$F_{118} = \frac{4}{2\sqrt{2}} ouv P_{119} F_{113} \frac{\lambda_{las} + \lambda_{fluo}}{\lambda_{las} \lambda_{fluo}}$$

Il est donc être utile de pouvoir modifier la distance focale de la lentille 118, ou de la remplacer par un système avec zoom ou par un système de grossissement variable avec des éléments optiques interchangeables.

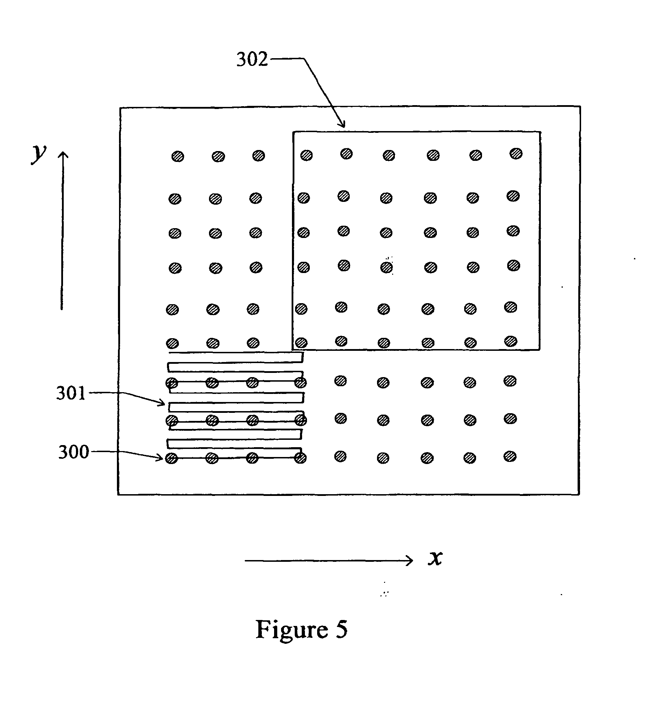

Les miroirs galvanométriques 110 et 112 sont commandés de manière à déplacer les points éclairés dans l'objet observé 114, de la, manière indiquée sur la figure 5. La figure 5 montre en grisé l'ensemble des points éclairés par les sous-faisceaux d'excitation FX dans le plan observé de l'objet, pour une position de référence des miroirs galvanométriques. Le diamètre des points représente le diamètre approximatif des taches de diffraction correspondantes. Le trait 301 superposé au dessin montre la trajectoire suivie par un point éclairé 300 lorsque les miroirs galvanométriques sont commandés. Cette trajectoire est parcourue alternativement dans les deux sens. Lorsque cette trajectoire est suivie, chaque point éclairé balaye une petite partie du plan image, et l'ensemble des points éclairés balaye l'ensemble du plan image. Une image confocale de l'ensemble du plan observé de l'objet 114 est donc générée sur le capteur 119. Le contour 302 montre la limite de la zone utile, de laquelle une image confocale de bonne qualité est générée sur le capteur. De nombreuses variantes de la trajectoire parcourue peuvent être utilisées, la contrainte essentielle étant que l'ensemble de la zone utile soit balayée, deux parties distinctes de la zone utile étant en général balayées par des points éclairés distincts.

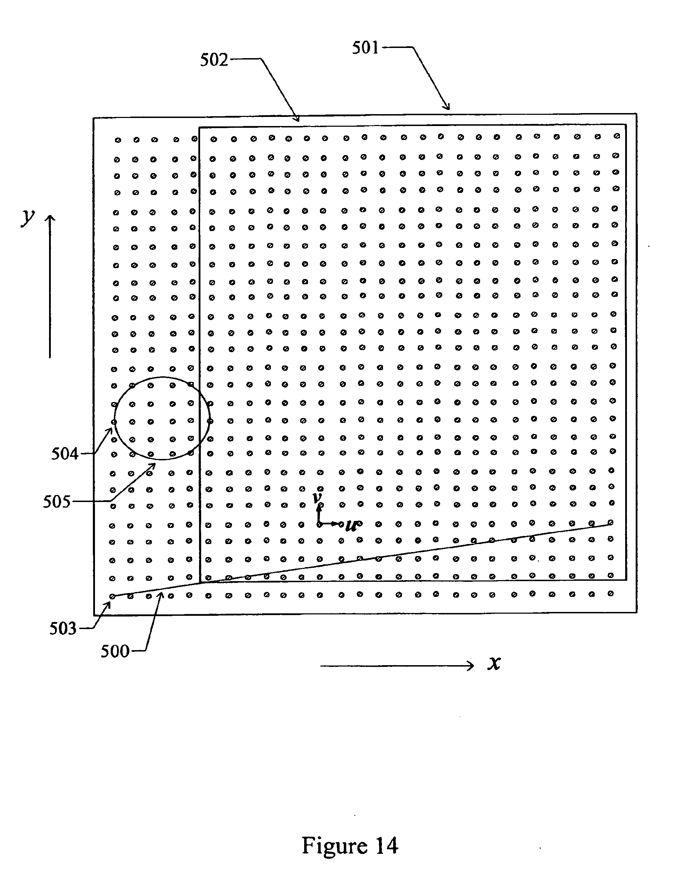

Les miroirs galvanométriques 110 et 112 peuvent également être commandés de manière à déplacer les points éclairés dans l'objet observé 114 de la manière indiquée par la figure 14. La figure 14, réalisée suivant les mêmes conventions que la figure 5; montre la trajectoire 500 d'un point éclairé 503 dans le plan observé de l'objet 114, ainsi que la zone 502 dans laquelle une image de bonne qualité est obtenue, la position des points éclairés pour la position de référence du miroir galvanométrique restant étant telle qu'indiquée sur la figure, limitée par le contour 501. Une trajectoire rectiligne 500 légèrement oblique par rapport aux vecteurs de base *x, y* du réseau périodique bidimensionnel de trous microscopiques permet de balayer l'ensemble du plan.

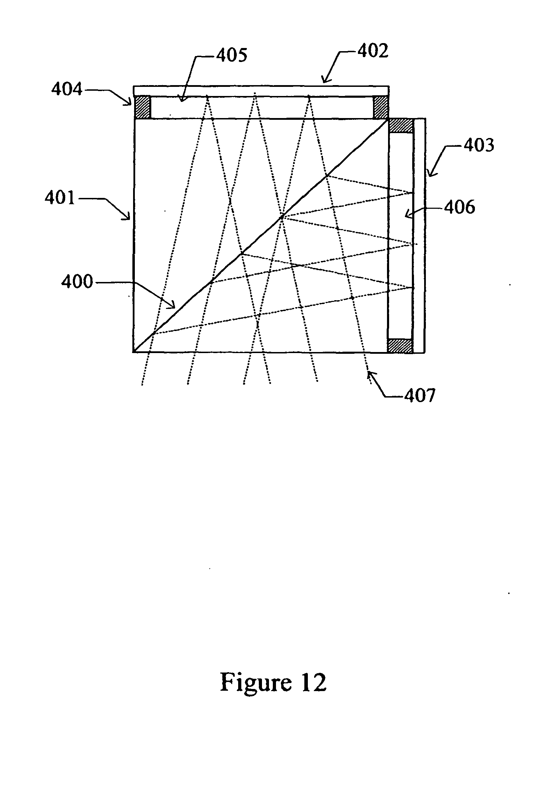

L'atténuateur de faisceau 140 doit être commandé en fonction de la position des miroirs galvanométriques et de leur vitesse. Ces paramètres peuvent être obtenus de manière connue par un feedback à partir des galvanomètres, ou peuvent être obtenus sans feedback à partir du système de commande des galvanomètres, avec une précision moindre. On note *Ilas* l'intensité du faisceau laser après traversée de l'atténuateur 140, et *Vscan* la vitesse de balayage, c'est-à-dire la vitesse de déplacement dans le plan observé et suivant l'axe x d'un point éclairé dans l'objet observé. Cette vitesse de balayage est due uniquement au miroir galvanométrique le plus rapide. La position des miroirs galvanométriques peut être caractérisée par la position du point éclairé dans l'objet 114. Les figures 6 et 12 illustrent la valeur

du rapport $\dfrac{Ilas}{Vscan}$ en fonction de la position du point éclairé dans l'échantillon 114. La figure 6 représente un ensemble de points éclairés, dont le point 300 également représenté sur la figure 5, pour la position de référence des miroirs galvanométriques. Sur cette figure on a représenté en traits continus les arêtes de la surface représentant la fonction $\dfrac{Ilas}{Vscan}$ en fonction des coordonnées *x,y* du point 300 dans le plan observé. Sur la figure 7, on a représenté l'allure de cette fonction le long de la ligne 310 de la figure 6. Une valeur constante de $\dfrac{Ilas}{Vscan}$ sur l'ensemble de la trajectoire, c'est-à-dire une commande de l'atténuateur en fonction de la seule vitesse de balayage, permettrait en principe de supprimer les variations d'éclairage dues aux variations de la vitesse de balayage. Toutefois, la courbe de la figure 7 permet également d'atténuer les effets d'une variation incontrôlée de l'amplitude d'oscillation des miroirs, au prix toutefois d'une perte d'intensité lumineuse. Il est également possible de faire fonctionner l'atténuateur de faisceau en mode binaire. La commande de l'intensité se fait alors par exemple conformément à la figure 8. Seule la partie centrale de la trajectoire, sur laquelle la vitesse est à peu près constante, est utilisée. Enfin, il est également possible de ne pas utiliser d'atténuateur de faisceau. L'image reste de qualité acceptable mais peut être affectée par des variations locales de l'intensité, qui peuvent être compensées par un traitement numérique ultérieur. D'une manière générale, plus le nombre de trous microscopiques est élevé et plus la surface d'un point éclairé est élevée, moins les variations d'intensité d'éclairage sont notables. L'utilisation d'un réseau suffisamment dense de trous microscopiques peut donc se substituer partiellement à l'usage d'un atténuateur de faisceau.

A chaque objectif 113 utilisable, caractérisé par son ouverture, son grossissement, et la position de son plan focal image, correspond un dimensionnement optimal des trous microscopiques utilisés, des microlentilles et de la lentille 108. On peut concevoir ces éléments de manière à ce qu'ils conviennent à l'ensemble des objectifs, toutefois les propriétés du système seront sous-optimales avec certains objectifs. Il est également possible de concevoir une série d'objectifs étudiés pour donner les meilleurs résultats avec un dimensionnement donné du reste du système. Toutefois, il est préférable de pouvoir échanger les trous microscopiques utilisés et les microlentilles, de manière à pouvoir les optimiser en fonction des objectifs utilisés, des longueurs d'ondes d'excitation et de fluorescence, du niveau de fluorescence, de la vitesse d'acquisition souhaitée, de la résolution souhaitée. A cette fin, le réseau de microlentilles 103, le réseau de trous microscopiques 130, et le miroir dichroïque 104, peuvent être rendus solidaires entre eux et constituer un bloc échangeable d'une seule pièce. Ceci évite à l'utilisateur d'avoir à régler l'alignement des différents éléments: les problèmes d'alignement sont réglés à la fabrication du bloc. Le positionnement du bloc dans le reste du système doit simplement se faire avec une précision angulaire suffisante (de l'ordre de 1 miliradian).

Le présent mode de réalisation peut être combiné avec tous les modes d'imagerie connus en microscopie confocale. En particulier, le porte-objet peut être muni d'un système de déplacement vertical piézoélectrique ou par moteur pas à pas, de manière à pouvoir générer des images tridimensionnelles en modifiant le plan de focalisation. Des systèmes à base d'atténuateurs acousto-optiques peuvent être utilisés pour commuter plusieurs lasers et exciter des fluorophores différents, de manière à générer par superposition des images plus riches en information. Le système est également compatible avec l'utilisation de la méthode à deux photons, le nombre de trous microscopiques devant alors être ajusté pour qu'une intensité suffisante reste disponible sur chaque point de focalisation du faisceau. Des roues de filtres (filtre 141) peuvent être utilisées pour modifier longueurs d'ondes détectées. Le miroir dichroïque 104 peut être remplacé par un miroir semi-transparent de manière à pouvoir changer de longueurs d'onde d'excitation et de fluorescence en commutant un laser et en changeant de filtre 141, sans avoir à échanger le miroir dichroïque 104. Le remplacement du miroir dichroïque 104 par un miroir semi-transparent permet également d'utiliser l'appareil pour observer en réflexion des échantillons diffractifs non fluorescents.

Il est possible, au moyen de lentilles relais, de modifier le dispositif de manière à ce que l'ensemble du système de balayage soit placé en arrière d'un plan image intermédiaire. Une telle solution peut être utile pour réaliser un dispositif de balayage adaptable à tout type de microscope.

Il est bien entendu possible de n'utiliser qu'un seul trou microscopique, auquel cas les caractéristiques de vitesse sont celles d'un microscope confocal à balayage par miroirs galvanométriques du type courant. Toutefois, l'avantage du système reste de pouvoir visualiser directement l'image et de pouvoir l'enregistrer sur une caméra.

Il peut être utile d'équiper l'appareil d'un dispositif de positionnement de l'échantillon 114 dans le sens de l'axe optique. En effet, ceci permet d'obtenir des images tridimensionnelles constituées de séries d'images bidimensionnelles obtenues chacune à une profondeur différente. L'image tridimensionnelle obtenue peut ensuite faire l'objet d'une déconvolution tridimensionnelle qui en améliore la résolution. Préalablement à la déconvolution, la PSF ("point spread function" en anglais, ou réponse impulsionnelle tridimensionnelle) doit être mesurée, par exemple sur une microbille fluorescente.

## Mode de réalisation multipoints laser avec compensation de certains défauts.

La figure 9 illustre un mode de réalisation dérivé du précédent mais amélioré par plusieurs dispositifs additionnels.

La pluralité de sous-faisceaux d'éclairage issue du réseau de microlentilles 103 traverse une vitre 106 mobile en rotation autour d'un axe 107, puis une lentille optionnelle 135 , puis un second système de filtrage spatial formé par un réseau de trous microscopiques 105, et ne parvient qu'ensuite au miroir dichroïque 104.

La surface de la vitre 106 est divisée en un ensemble de sous-surfaces, par exemple les sous-surfaces 120 et 121. La moitié de ces sous-surfaces portent une surépaisseur générant un décalage de phase de 180 degrés des sous-faisceaux d'éclairage les traversant. Les sous-surfaces portant des surépaisseurs sont réparties de manière pseudo-aléatoire dans l'ensemble des sous-surfaces. Chaque sous-surface est approximativement carrée. La largeur du coté du carré est égale à la distance entre deux trous microscopiques adjacents du réseau 105. La vitre 106 est positionnée de manière à ce que chaque trou microscopique du réseau 105 soit placé au-dessous d'une sous-surface distincte. La rotation rapide de la vitre 106 permet de générer des décalages de phase pseudo-aléatoires de l'ensemble des sous-faisceaux d'éclairage, de sorte que la cohérence spatiale des sous-faisceaux soit rompue après traversée de la vitre 106. En effet la cohérence entre faisceaux est susceptible de perturber légèrement l'image.

Une difficulté pratique est liée au fait que des objectifs de différents grossissements ont des plans focaux image distincts. Par conséquence, le plan focal objet de la lentille 108 (dans le sens de l'objectif vers la lentille 108) ne peut être confondu avec le plan focal image de l'objectif que pour un des objectifs utilisés. Il est possible de pallier à cette difficulté en augmentant l'ouverture des sous-faisceaux d'éclairage issus de chaque microlentille, ce qui diminue l'intensité lumineuse disponible. La lentille 135 permet de pallier cette difficulté sans qu'il y ait perte d'intensité lumineuse. Elle doit être dimensionnée de manière à ce qu'une onde plane dans l'objet ait pour image une onde plane entre la lentille 135 et le réseau de microlentilles 103. Un changement d'objectif doit alors s'accompagner d'un changement de la lentille 135.

Le réseau de trous microscopiques 105 formant le second système de filtrage spatial a pour vocation de filtrer les sous-faisceaux lasers issus des microlentilles du réseau 103. Ceci permet de pallier d'éventuelles imperfections de ces microlentilles. Chaque trou microscopique du réseau 105 est placé au point de focalisation d'une microlentille correspondante et son diamètre peut par exemple être d'une tache d'Airy ou d'une demi-tache d'Airy, selon que l'on souhaite optimiser la résolution ou la luminosité.

Le réseau de microlentilles 131 placé devant le premier système de filtrage spatial formé par le réseau de trous microscopiques 130 est surtout utile lorsque la longueur d'onde d'excitation est très inférieure à la longueur d'onde de l'émission fluorescente et lorsque le diamètre des trous microscopiques est de l'ordre d'une tache d'Airy. Il permet alors d'améliorer légèrement la résolution sans sacrifier la luminosité.

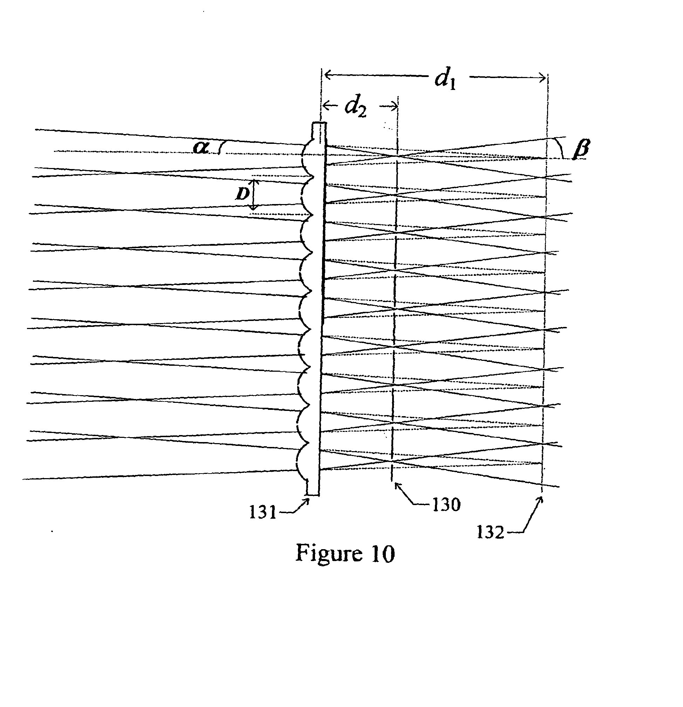

La figure 10 montre le principe de fonctionnement des microlentilles du réseau 131 et des trous microscopiques du réseau 130. L'angle $\alpha$ indiqué sur cette figure vaut, comme sur la figure , $\alpha = ouv \dfrac{F_{113}}{F_{108}}$. On a représenté le plan focal 132 de la lentille 108. En l'absence du réseau de microlentilles 131, le réseau de trous microscopiques 130 devrait être placé dans ce plan, et l'angle de divergence du faisceau après passage des trous microscopiques, dans la mesure ou ces trous sont suffisamment larges, serait $\alpha$ Le réseau de lentilles 131 a pour utilité d'augmenter cet angle de divergence, ce qui équivaut à diminuer le diamètre des tache d'Airy formées sur chaque trou du réseau de trous microscopiques 130. Ceci permet de diminuer le diamètre des trous microscopiques du réseau 130 sans perte d'intensité lumineuse, ce qui permet ensuite une réception sur un capteur CCD sans que la résolution soit diminuée par la superposition des taches d'Airy obtenues pour des points proches. L'angle de divergence du faisceau après passage des trous microscopiques devient, compte tenu des microlentilles du réseau 131, $\beta = m\alpha$ avec typiquement $m = 1,5$ à $m = 4$. Les distances $d_2$ entre le réseau de microlentilles 131 et le réseau de trous microscopiques 130, $d_1$ entre le réseau de microlentilles 131 et le plan focal 132 de la lentille 108, et la distance focale $F_{131}$ des microlentilles du réseau 131, sont liées par l'équation des lentilles minces (qui peut éventuellement être modifiée pour prendre en compte l'épaisseur des lentilles):

$$\frac{1}{d_2} - \frac{1}{d_1} = \frac{1}{F_{131}}$$

et on a par ailleurs, compte tenu du coefficient m recherché:

$$\frac{d_1}{d_2} = m$$

De plus pour des raisons d'encombrement on a:

$$D = 2d_1 c\alpha$$

avec $c \geq 1$. Typiquement on peut prendre $c = 2$.

Compte tenu également de l'expression de l'angle $\alpha = ouv\dfrac{F_{113}}{F_{108}}$, on obtient finalement:

$$d_1 = \frac{D}{2c}\frac{F_{108}}{F_{113}}\frac{1}{ouv}$$

$$F_{131} = \frac{1}{m-1}d_1$$

$$d_2 = \frac{1}{m}d_1$$

La largeur des trous microscopiques sur le réseau 130 peut être égale au diamètre de la tache d'Airy sur ces trous soit:

$$L_{130} = 1,22\frac{1}{m}\frac{\lambda_{fluo}}{ouv}\frac{F_{108}}{F_{113}}$$

ou $\lambda_{fluo}$ est la longueur d'onde correspondant au maximum de l'émission fluorescente.
En reprenant l'exemple de dimensionnement utilisé dans le mode de réalisation précédent pour les réseaux 103 et 105 on obtient, pour $c = 2$ et $m = 4$, et pour $\lambda_{fluo} = 518$ nm (fluorescéine):
$F_{113} = 2$ mm
$ouv = 1,25$
$F_{108} = 200$ mm
$D = 2$ mm
$F_{103} = 80$ mm
$d_1 = 40$ mm
$F_{131} = 13,33$ mm
$d_2 = 10$mm
$L_{130} = 12\mu$m

## Mode de réalisation multipoint en éclairage incohérent

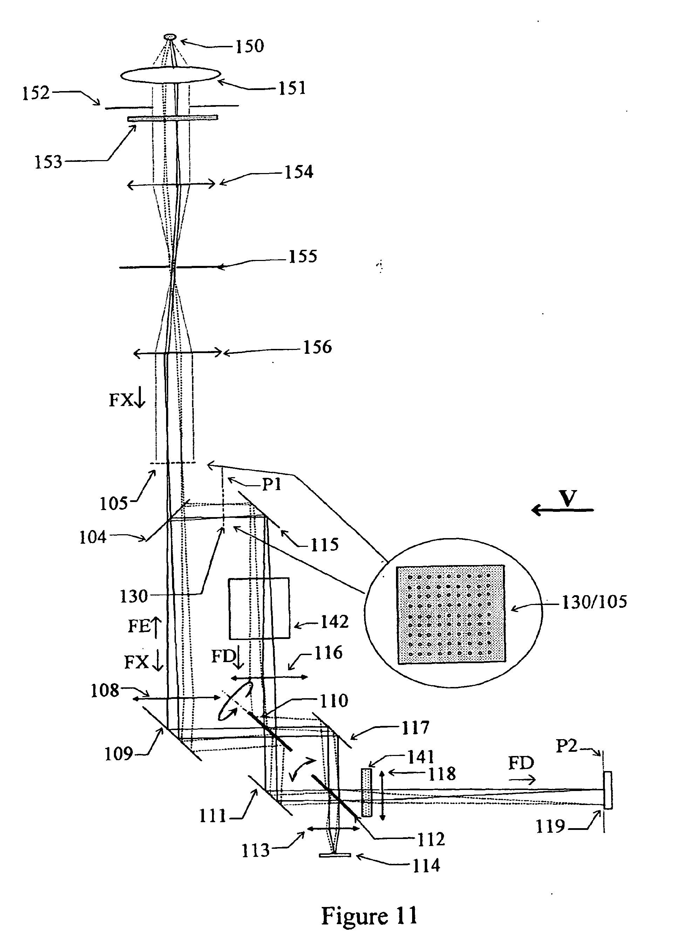

Ce mode de réalisation qui est représenté sur la figure 11 diffère de celui représenté sur la figure 1 par le fait qu'un éclairage non cohérent est utilisé. Ceci limite la vitesse d'imagerie mais permet l'utilisation d'un éclairage moins coûteux et dont la longueur d'onde peut être aisément ajustée, ou l'utilisation d'un éclairage en lumière blanche pour l'observation en lumière réfléchie.

Le faisceau d'éclairage FX est fourni par exemple par l'arc incandescent 150 d'une lampe à vapeur de mercure ou de Xénon. Ce faisceau d'éclairage traverse un collecteur 151, un diaphragme de champ 152, un filtre monochromateur 153 sélectionnant la longueur d'onde d'excitation de la fluorescence de l'objet à observer. Ensuite, ce faisceau d'éclairage FX traverse la lentille 154, le diaphragme d'ouverture 155, la lentille 156, et parvient directement au réseau de trous microscopiques 105 formant le second système de filtrage spatial. L'ensemble constitué des éléments 150 à 156 constitue un éclairage de Köhler et peut être remplacé par tout autre système d'éclairage de Köhler. Le reste du système est identique au mode de réalisation de la figure 1.

Une grande partie de l'intensité lumineuse disponible est réfléchie par le réseau de trous microscopiques 105, ce qui limite la clarté de l'image formée dans le plan 119 confondu avec le second plan image P2. Afin que le temps d'acquisition et la clarté de l'image restent dans des limites raisonnables, il est préférable d'utiliser un réseau 105 constitué de trous microscopiques très rapprochés les uns des autres. Alors que dans le mode de réalisation précédent, la distance entre deux trous microscopiques peut typiquement être d'environ 20 fois la largeur de chaque trou, dans le présent mode de réalisation il est préférable de limiter cette distance, qui peut par exemple être de 2 à 4 fois la largeur du trou microscopique. Ceci génère des perturbations de l'image, mais l'effet confocal est maintenu et les perturbations peuvent être supprimées par exemple par une déconvolution tridimensionnelle dans le cas ou une image tridimensionnelle est acquise, composée d'une série d'images bidimensionnelles acquises à des profondeurs différentes dans l'objet.

Pour permettre l'échange des deux réseaux de trous microscopiques sans que cet échange nécessite de réglage complexe, et pour diminuer le coût de fabrication, les réseaux de trous microscopiques 105,130 et le miroir dichroïque 104 peuvent être intégrés en un seul élément aisément réalisable, représenté sur la figure 12. Le miroir dichroïque 400 est intégré à un cube transparent 401. Des vitres 402, 403 sont montées sur les cotés du cube, dont elles sont solidarisées par des pièces adaptées, par exemple 404. Des espaces vides 405,406 sont laissés entre les vitres et le cube 401. Le coté des vitres 402,404 qui regarde vers le cube est recouvert d'une couche mince métallique et d'une couche mince de résine photosensible. Les trous microscopiques sont réalisés par insolation de la résine photosensible à l'aide d'un projecteur en lumière blanche. On a représenté symboliquement en pointillés l'allure du faisceau issu de ce projecteur. Le projecteur est focalisé par exemple sur le plan constitué par la face de la vitre 402 qui porte les couches minces. Chaque point éclairé de la vitre 402 deviendra un trou microscopique. Du fait de la configuration du système, les points de la vitre 403 qui sont éclairés sont correctement placés sans qu'un réglage supplémentaire soit nécessaire, et deviendront les trous microscopiques correspondant aux trous de la vitre 402. Après insolation, un liquide approprié est introduit dans les espaces vides 405,406 de manière à enlever la résine aux endroits insolés, puis un acide est utilisé pour enlever le métal en ces mêmes points. On a alors obtenu les trous microscopiques. Un solvant peut être utilisé pour enlever la couche résiduelle de résine, et l'ensemble peut finalement être nettoyé. Enfin, il peut être utile d'introduire un liquide optique ou un plastique transparent dans l'espace vide, de préférence de même indice que les lames 402,403. Ceci évite les réflexions inutiles sur les surfaces de contact. Si un matériau de même indice que les lames 402, 403 est introduit dans les espaces vides, alors on peut utiliser pour réaliser l'ensemble des vitres 402,403 dépolies sur leur face qui regarde vers le cube. Ceci permet une meilleure dispersion de la lumière incidente par les parties réfléchissantes. Les monochromateurs 153 et 141 peuvent également être intégrés à ce cube, ce qui permet de modifier le mode d'imagerie par échange d'un seul composant. Si une observation en lumière réfléchie est recherchée, le miroir dichroïque peut être remplacé par un cube séparateur neutre.

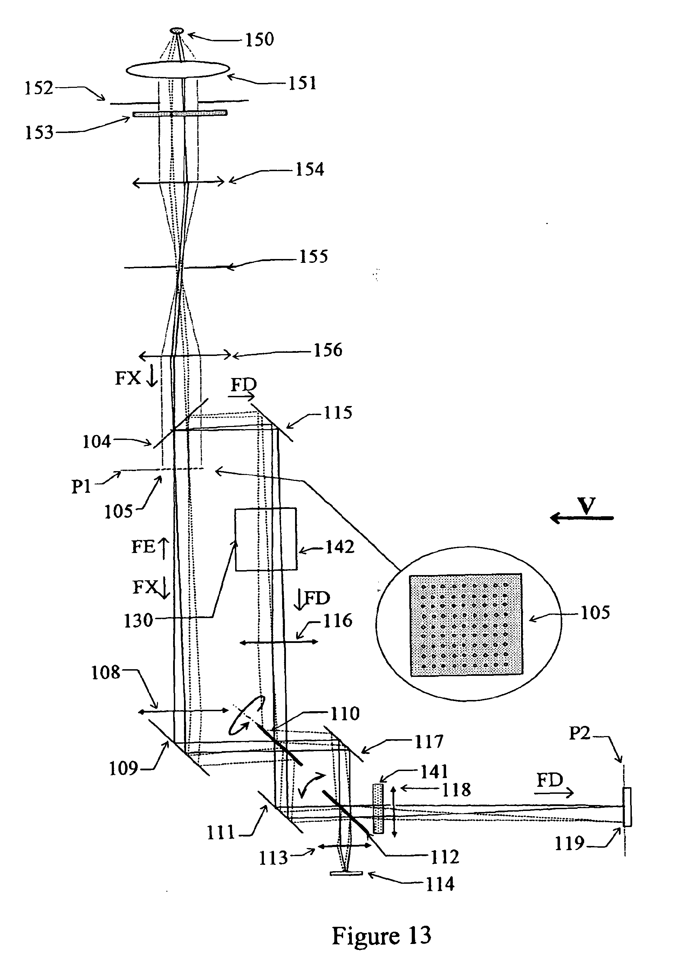

Une autre solution simplifiant l'échange des réseaux de trous microscopiques consiste à n'utiliser qu'un seul réseau de trous, qui est traversé dans un sens par le faisceau d'éclairage FX et dans l'autre sens par le faisceau lumineux FE émis par fluorescence depuis l'échantillon observé. Dans ce cas le système est modifié comme indiqué sur la figure 13: un seul réseau de trous microscopiques 105 est utilisé, mais le miroir dichroïque 104 est placé entre la lentille 156 et le réseau de trous microscopiques 105. Le réseau de microlentilles 131 est également supprimé et le dimensionnement mécanique est modifié pour tenir compte du remplacement du réseau 130 par le réseau 105. Cette configuration est particulièrement simplifiée, toutefois cette simplification a pour conséquence la présence d'une forte intensité de lumière résultant de la réflexion partielle du faisceau d'éclairage FX par le réseau de trous 105 ("stray light"), qui doit être éliminée par le miroir dichroïque 104 et le filtre 141. Un avantage de cette configuration est que l'échange du réseau 105, qui constitue à la fois les moyens pour diviser le faisceau d'éclairage en sous-faisceaux, et le premier dispositif de filtrage spatial, peut se faire sans problèmes d'alignement.

Il est également possible de supprimer un des miroirs galvanométriques 110 ou 112 et de le remplacer par un miroir fixe, à condition de modifier légèrement l'axe de rotation du miroir restant et de le commander de manière à avoir pour chaque point éclairé une trajectoire suffisamment longue. La figure 14, réalisée suivant les mêmes conventions que la figure 5, montre la trajectoire 500 d'un point éclairé 503 dans le plan observé de l'objet 114, ainsi que la zone 502 dans laquelle une image de bonne qualité est obtenue, la position des points éclairés pour la position de référence du miroir galvanométrique restant étant telle qu'indiquée sur la figure, limitée par le contour 501. Une trajectoire rectiligne 500 légèrement oblique par rapport aux vecteurs de base *x,y* du réseau périodique bidimensionnel de trous microscopiques permet de balayer l'ensemble du plan sans avoir recours à un deuxième miroir galvanométrique. Il est d'autant plus facile d'obtenir une zone 502 étendue que les points éclairés sont rapprochés les uns des autres. Comme dans le présent mode de réalisation il est préférable, afin de maximiser l'intensité d'éclairage, d'avoir des points éclairés nombreux, le présent mode de réalisation est particulièrement bien adapté à l'utilisation de cette technique. Toutefois, il est également possible d'utiliser une trajectoire rectiligne dans un mode de réalisation utilisant un réseau de microlentilles, à condition que les points éclairés soient suffisamment nombreux.

De même, il est possible d'utiliser les deux miroirs galvanométriques commandés en quadrature de sorte que la trajectoire de l'image d'un point 504 se déplace sur un cercle 505, et de modifier progressivement le diamètre de ce cercle de manière à ce que la trajectoire parcourue pendant une acquisition d'image soit une spirale. Si les trous microscopiques sont suffisamment nombreux et proches les uns des autres l'ensemble du plan est balayé. L'avantage de cette solution est que le mouvement du point éclairé est à vitesse à peu près constante, toutefois ce type de balayage tend à générer des suréclairages suivant des lignes parallèles aux vecteurs directeurs du réseau de trous microscopiques.

Ce mode de réalisation a l'avantage de ne pas nécessiter un faisceau laser. Il a également l'avantage de permettre une modification aisée des longueurs d'onde d'excitation et d'émission de la fluorescence dans l'ensemble du domaine visible et UV. Par contre, la faiblesse de l'éclairage limite la vitesse d'imagerie.

Ce second mode de réalisation peut être combiné avec le premier dans un même appareil, des obturateurs pouvant être utilisés pour passer d'un mode d'éclairage à un autre.

## Mode de réalisation avec une réflexion supplémentaire du faisceau d'éclairage sur le miroir mobile

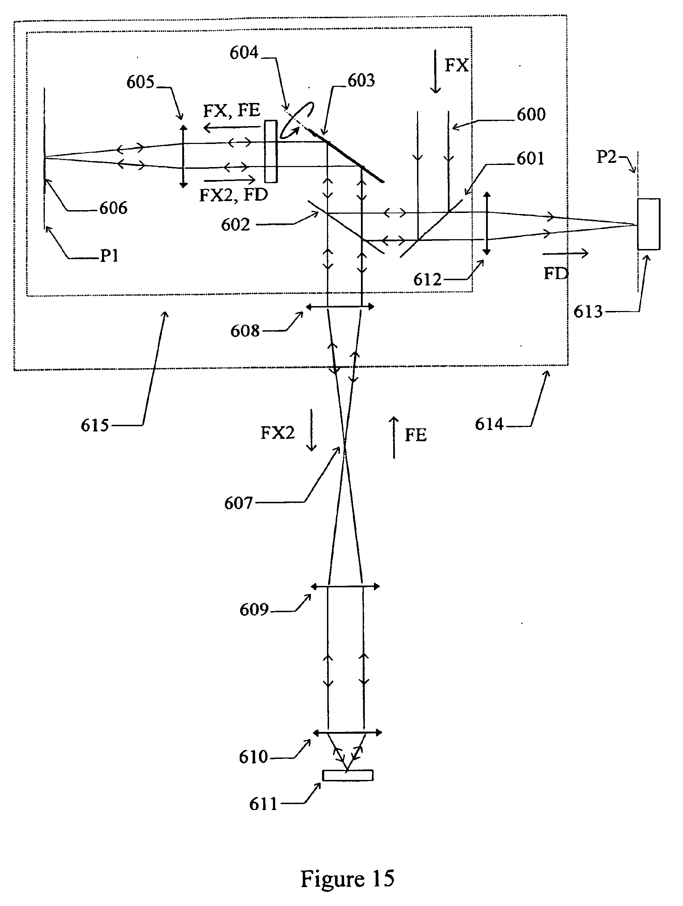

La figure 15 illustre un autre mode de réalisation, qui présente l'avantage d'être peu coûteux. En effet il utilise un éclairage non cohérent, et il nécessite moins de réglages ou d'éléments spécifiques que le mode de réalisation précédent. Il utilise un seul miroir galvanométrique et une seule face de ce miroir, et il utilise un réseau de miroirs microscopiques.

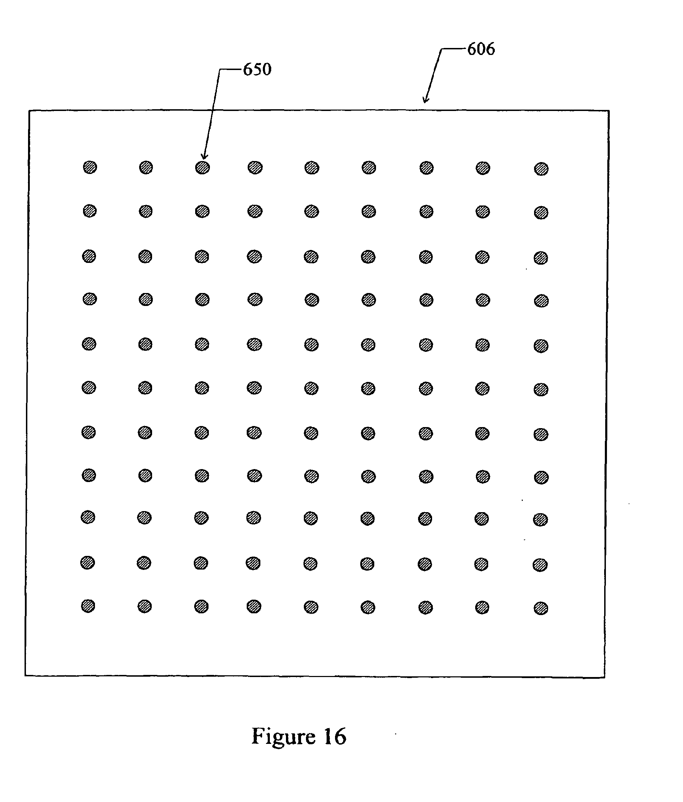

Le faisceau d'excitation FX est un faisceau non cohérent produit par exemple par une lampe à arc au Xénon équipée d'un collecteur ou d'un ensemble optique permettant la génération d'un éclairage de Köhler. Il est filtré par un filtre passe-bande étroit qui sélectionne la longueur d'onde d'excitation de la fluorescence. Il parvient au dispositif de balayage en 600. Le faisceau d'éclairage ou d'excitation FX est réfléchi par le miroir dichroïque 601 puis par le séparateur de faisceau polarisant 602. Le faisceau d'éclairage FX est ensuite réfléchi par le miroir galvanométrique 603, traverse la lame quart d'onde 604 dont l'axe neutre est à 45 degrés du plan de la figure, traverse la lentille 605 et parvient au réseau de miroirs microscopiques 606 placés dans le plan focal image de la lentille 605. Le réseau de miroirs microscopiques 606 est du type représenté sur la figure 16 et il est constitué par exemple d'un ensemble de miroirs microscopiques (par exemple 650) formant une matrice carrée, sur une vitre de verre transparente traitée antiréflexion. Le réseau de miroirs microscopiques peut également être à maille hexagonale, ce qui permet d'améliorer l'efficacité du système. Les miroirs microscopiques peuvent être obtenus par exemple par litographie, chaque miroir étant constitué d'une couche réfléchissante déposée sur la vitre 606, la vitre étant de préférence traitée antiréflexion. La couche réfléchissante peut par exemple être une couche d'aluminium. On peut aussi utiliser des miroirs constitués d'une alternance de couches d'indices différents, et qui peuvent ainsi être sélectifs en longueur d'onde. La partie du faisceau d'éclairage FX qui est réfléchie par les miroirs microscopiques se présente sous la forme d'une pluralité de sous-faisceaux d'éclairage FX2. Ces sous-faisceaux d'éclairage FX2 retraversent la lentille 605, la lame quart d'onde 604, et sont réfléchis par le miroir galvanométrique 603. Les sous-faisceaux d'éclairage FX2 traversent le séparateur de faisceau polarisant 602 puis la lentille 608 et la lentille de tube 609. Ils traversent l'objectif 610 et sont focalisés en une pluralité de points d'éclairage FXO sur l'objet fluorescent observé 611. Les sous-faisceaux lumineux FE réémis, par fluorescence des points éclairés de l'objet fluorescent traversent l'objectif 610, la lentille de tube 609, la lentille 608, le séparateur de faisceau polarisant 602. Les sous-faisceaux lumineux FE sont réfléchis par le miroir galvanométrique 603, traversent la lame quart d'onde 604 et la lentille 605, et parviennent au réseau de miroirs microscopiques 606 qui constitue alors le premier système de filtrage spatial. La partie des sous-faisceaux lumineux FE qui sont réfléchis par ce réseau de miroirs microscopiques constitue la pluralité de sous-faisceaux à détecter FD. Ces sous-faisceaux à détecter FD traversent la lentille 605, la lame quart d'onde 604, sont réfléchis par le miroir galvanométrique 603, sont réfléchis par le séparateur de faisceau polarisant 602, traversent le miroir dichroïque 601 et la lentille 612, puis parviennent au capteur CCD 613 situé dans le plan focal image de la lentille 612 qui est confondu avec le second plan image P2. L'image formée dans le plan ou se trouve le capteur 613 peut également être observée à l'aide d'un oculaire.

Le plan focal 607 de la lentille de tube 609 est également un plan focal de la lentille 608. L'autre plan focal de la lentille de tube 609 est de préférence confondu avec le plan focal image de l'objectif 610. De préférence le miroir galvanométrique 603 est dans un plan focal commun des lentilles 605, 608 et 612. Le réseau de miroirs microscopiques 606 est dans un plan focal de la lentille 605 confondu avec le premier plan image P1. Le capteur CCD 613 est dans un plan focal de la lentille 612. Par exemple, les lentilles 609, 608, 605, 612 peuvent avoir une distance focale de 200 mm, l'objectif 610 peut être un objectif Nikon à immersion x100 d'ouverture 1,4 . Dans ce cas le réseau 606 peut par exemple être formé de miroirs microscopiques dont le diamètre est de 30 microns, la distance entre deux points adjacents étant par exemple de 150 microns. Le miroir dichroïque 601 réfléchit la longueur d'onde du faisceau d'excitation et laisse passer la longueur d'onde d'émission fluorescente. La lame d'onde 604 sert à modifier la polarisation des faisceaux de sorte par exemple que la pluralité de sous-faisceaux à détecter FD soit réfléchie par le séparateur polarisant 602 alors que la pluralité de sous-faisceaux lumineux FE le traverse.

Le miroir galvanométrique 603 peut par exemple être mobile en rotation autour d'un axe situé dans le plan de la figure. Dans ce cas, le réseau de miroirs microscopiques 606 doit être orienté de manière à ce que la trajectoire d'un point éclairé dans l'objet soit légèrement oblique par rapport à un vecteur directeur du réseau périodique de points éclairés, comme décrit par la trajectoire 500 de la figure 14, ce qui permet de scanner l'ensemble de l'objet à l'aide d'un seul miroir galvanométrique.

Le réseau de miroirs microscopiques 606 est placé dans un plan P1 qui constitue le premier plan image, dans lequel est placé le premier système de filtrage spatial. Le réseau de miroirs 606 forme à la fois le premier système de filtrage spatial, qui filtre le faisceau lumineux FX provenant de l'échantillon pour donner le faisceau à détecter FD, et le second système de filtrage spatial, qui divise le faisceau d'éclairage FX en une pluralité de sous-faisceaux FX2.

Comme dans le premier mode de réalisation, il aurait été possible de mettre le miroir galvanométrique 603 dans le plan focal image de l'objectif ou à proximité de ce plan. On a introduit les lentilles relais 609 et 610 pour illustrer la possibilité d'une telle construction, qui se prête particulièrement bien à la réalisation d'un dispositif de balayage adaptable à tout type de microscope.

La position du réseau 606 doit être ajustée en rotation autour de l'axe optique de manière à ce qu'un vecteur directeur du réseau de points éclairés dans l'objet observé soit légèrement oblique par rapport à la trajectoire 500 d'un point éclairé lorsque le miroir 603 tourne, comme indiqué par la figure 14. La position du réseau 606 doit être ajustée en translation dans le sens de l'axe optique de manière que le réseau 606 soit conjugué au CCD 613. Ces réglages sont aisément réalisables.

Le présent mode de réalisation présente l'avantage d'être peu coûteux et de nécessiter peu de réglages. Il est bien adapté à une version bas coût de l'invention, destinée à l'observation en fluorescence. L'appareil peut être muni d'un système de déplacement vertical de l'échantillon, auquel cas la qualité de l'image obtenue peut être améliorée par une déconvolution tridimensionnelle. Une telle déconvolution permet d'améliorer la résolution et de supprimer la plupart des défauts dus aux réflexions parasites dans le système, et éventuellement de compenser les défauts liés à la faiblesse de la distance séparant les points du réseau 606. Elle nécessite la mesure préalable de la PSF ("Point Spread Function" en anglais) qui peut être effectuée par imagerie d'une microbille fluorescente, selon une technique connue.

Le dispositif à balayage confocal peut comprendre l'ensemble des éléments contenus dans la zone limitée par le pointillé 614. Dans ce cas l'utilisateur doit simplement connecter au système un microscope et un oculaire ou une caméra. Toutefois, le dispositif à balayage confocal peut aussi ne comprendre que les éléments compris dans la zone limitée par le pointillé 615. Dans ce cas l'utilisateur est libre de choisir les lentilles 608 et 612, ce qui lui permet par exemple de modifier le grossissement du système par un choix approprié de la lentille 612. Il est également possible de rajouter une lentille dans le plan 607 afin de ramener à l'infini le plan focal image du microscope, dans le cas ou celui-ci n'est pas exactement placé dans un plan focal de la lentille de tube 609.

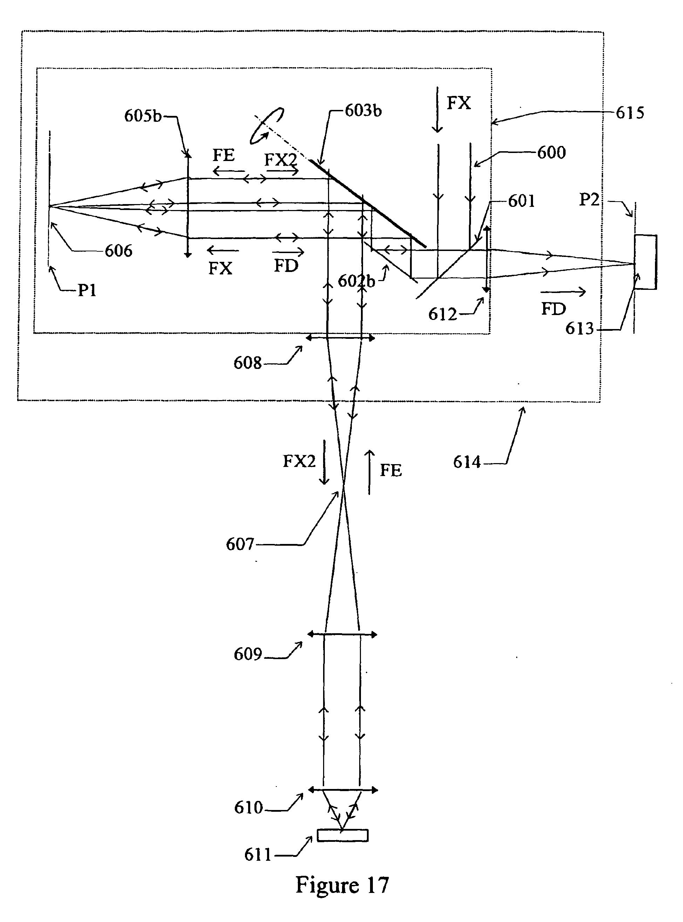

Pour éviter l'usage d'un séparateur de faisceau polarisant et la perte d'intensité lumineuse qui en résulte, le dispositif peut être modifié comme indiqué sur la figure 17. Sur la figure 17 les divers éléments du dispositif sont les mêmes que sur la figure 15, les éléments 602,603 et 605 étant toutefois remplacés respectivement par les éléments 602b, 603b et 605b. Le miroir polarisant 602 est remplacé par le miroir 5 simple 602b sur lequel se réfléchissent le faisceau d'éclairage FX et la pluralité de sous-faisceaux à détecter FD. Le miroir galvanométrique 603b est à peu près deux fois plus long que le miroir 603, et la lentille 605b est également plus grande que la lentille 605. L'axe optique de la lentille 605b est décalé par rapport à l'axe optique du faisceau d'éclairage FX provenant du miroir galvanométrique, de sorte que le faisceau d'éclairage FX arrive en biais sur le réseau de miroirs microscopiques 606. Les sous-faisceaux d'éclairage FX2 réfléchis par le réseau 606 parviennent alors sur une zone du miroir 603b distincte de celle qui était éclairée par le faisceau d'éclairage FX. Après réflexion sur 603b, les sous-faisceaux d'éclairage FX2 passent à coté du miroir 602b. La pluralité de sous-faisceaux lumineux FE provenant de l'échantillon suit le trajet inverse de sorte qu'après réflexion sur le réseau de trous microscopiques les sous-faisceaux à détecter FD parviennent au capteur. Le dispositif de la figure 17, pour sa simplicité de réalisation et son efficacité, constitue le mode de réalisation préféré pour l'observation en fluorescence avec un éclairage incohérent.

Un avantage du présent mode de réalisation est que le faisceau d'éclairage FX est réfléchi une première fois sur un miroir galvanométrique avant de parvenir au réseau de miroirs microscopiques. Il est ensuite réfléchi une seconde fois (faisceaux FX2) avant de parvenir à l'objet observé. De ce fait, la zone éclairée par le faisceau d'éclairage sur le réseau de miroirs microscopiques se déplace, alors que la zone éclairée dans l'objet observé reste fixe. Ceci diffère des précédents modes de réalisation multipoints, dans lesquels la zone éclairée dans le plan image se déplace, et donc la zone éclairée dans l'objet observé ne peut être rendue fixe que si elle limitée par un diaphragme situé dans le plan image, ce qui cause une déperdition d'énergie, ou en déplaçant les points d'éclairage sur des trajectoires très courtes, ce qui ne résout que partiellement le problème et pose des problèmes de synchronisation.

La synchronisation du système peut être simplifié en utilisant le déplacement de la zone éclairée sur le réseau de miroirs microscopiques. En effet, lorsque le faisceau d'éclairage, se déplaçant sur le réseau de miroirs microscopiques, sort de la zone couverte de miroirs microscopiques, alors l'objet observé cesse d'être éclairé. Il suffit de faire coïncider cette extinction avec les positions extrêmes du miroir galvanométrique pour supprimer l'inhomogénéité d'éclairage causée par le ralentissement du déplacement des miroirs aux alentours des points extrêmes (stationnaires) de leur trajectoire.

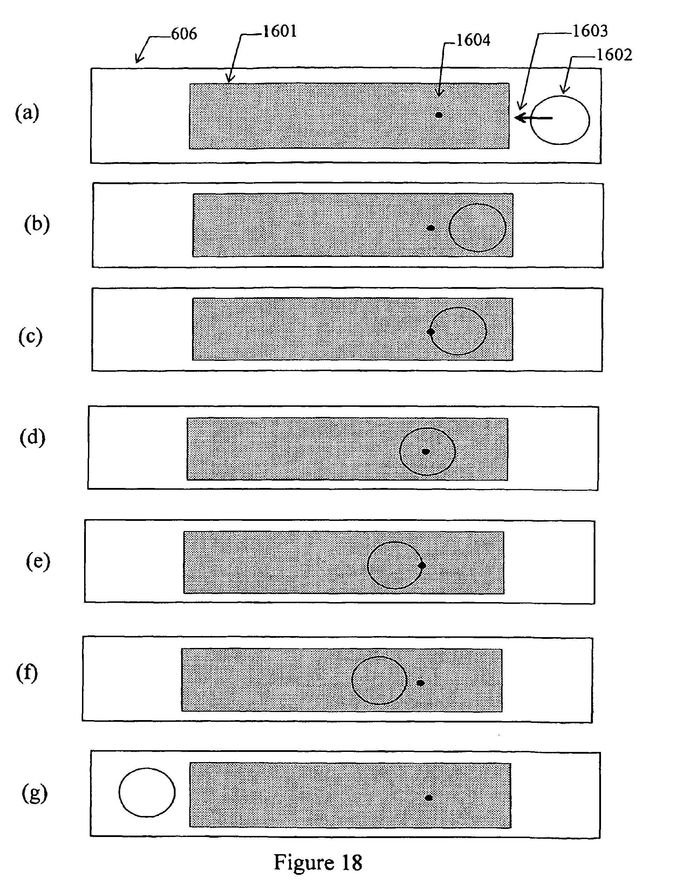

La figure 18 illustre ce principe de fonctionnement. La figure 18 (a) montre la plaque 606 sur laquelle se trouve un réseau de miroirs microscopiques 1601. On a également représenté la zone 1602 éclairée par le faisceau d'éclairage lorsque le miroir galvanométrique 603 atteint une position extrême de son mouvement d'oscillation. Dans la position indiquée sur la figure 18(a) la zone éclairée est en-dehors de la zone couverte de miroirs microscopiques, le faisceau d'éclairage traverse donc la plaque sans être réfléchi, et l'objet observé n'est pas éclairé. Dans cette position la plaque 606 permet donc de supprimer le faisceau d'éclairage avant qu'il ne parvienne à l'objet observé. La zone 1602 se déplace sur la plaque 1600 mais dans la position extrême représentée sur la figure 18(a) sa vitesse de déplacement s'annule avant que le déplacement de la zone éclairée reprenne dans la direction indiquée par la flèche 1603. La zone éclairée 1602 traverse alors la zone 1601 couverte de miroirs microscopiques, à une vitesse à peu près constante, comme indiqué par les figures 18 (b) à 18(f). Pendant cette phase l'objet observé est éclairé. Lorsque la position du miroir mobile atteint l'extrême inverse de son mouvement d'oscillation, la zone éclairée sort de la zone couverte de miroirs microscopiques et sa vitesse s'annule, comme indiqué par la figure 18 (g). L'objet observé cesse à nouveau d'être éclairé. La zone éclairée 1602 repart alors dans la direction opposée pour une autre traversée de la zone 1601 couverte de miroirs microscopiques. Si une caméra est utilisée pour la détection du signal, le mouvement du miroir galvanométrique peut être synchronisé avec l'acquisition par la caméra. Pendant le temps d'exposition de la caméra, la zone éclairée 1602 peut par exemple effectuer une ou plusieurs traversées complètes de la zone 1601.

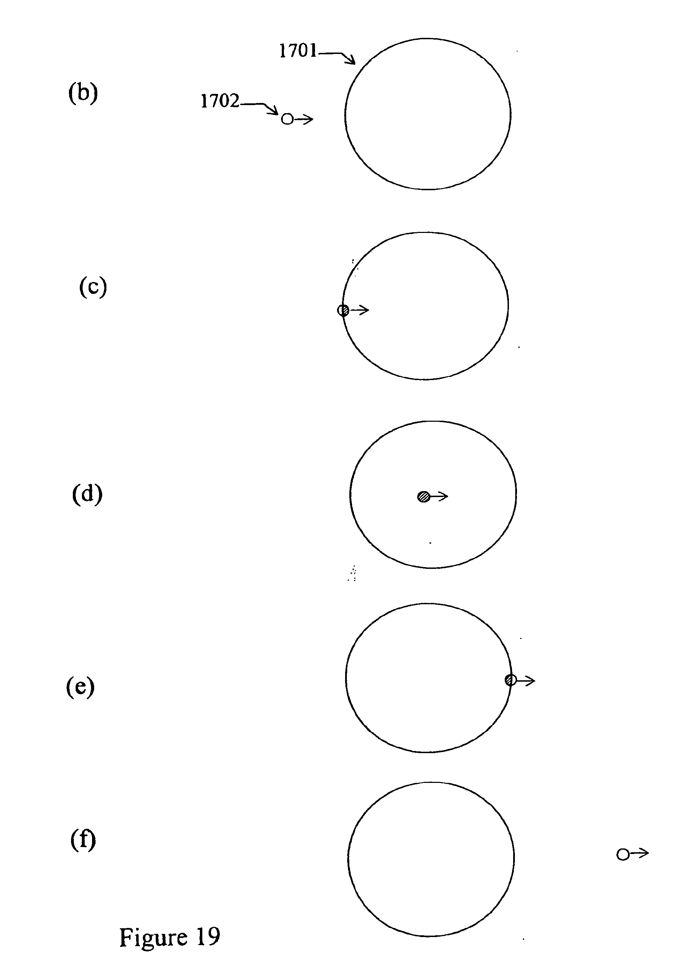

On a indiqué sur la figure 18 un miroir microscopique particulier 1604. La figure 19 illustre le mouvement dans l'objet de l'image géométrique 1702 du miroir 1604 , et donc du point éclairé correspondant dans l'objet. Le miroir 1604 peut être assimilé à un point du premier plan image P1, dans lequel se trouve la vitre 606. La figure 19(b) représente la position de l'image géométrique 1702 du miroir microscopique 1604, ainsi que la zone observée 1701 qui est l'image géométrique de la zone éclairée 1602 sur la plaque 606, ce pour une position de la zone éclairée 1602 sur la plaque 606 qui est celle représentée par la figure 18(b). Le point 1702 se déplace suivant la direction indiquée par une flèche mais n'a pas encore atteint la zone 1701, n'est donc pas encore éclairé. Ceci traduit le fait que sur la figure 18(b) la zone éclairée 1602 n'a pas encore atteint le point 1604. Le point 1702 parvient ensuite à la zone observée 1701 comme indiqué sur la figure 19(c) et commence donc à être éclairé, ce qui traduit le fait que la zone éclairée 1602 parvient au point 1604 comme indiqué sur la figure 18(c). Le point 1702 est alors éclairé et traverse la zone 1701 à vitesse constante, comme indiqué sur la figure 19(d), ce qui traduit le fait que le point 1604 est dans la zone éclairée comme indiqué par la figure 18(d). Le point 1702 parvient à la limite de de la zone observée, comme indiqué sur la figure 19(e) qui traduit le fait que le point 1604 est à la limite de la zone éclairée 1602, comme indiqué sur la figure 18(e). Le point 1702 sort alors de la zone observée et cesse alors d'être éclairé, comme indiqué sur la figure 19(f), ce qui traduit le fait que la zone éclairée 1602 a dépassé le point 1604, comme indiqué sur la figure 18(f). Le point 1702 continue alors à se déplacer à vitesse constante puis sa vitesse s'annule et il change de direction pour revenir vers la zone observée. Lorsque la vitesse de déplacement du point 1702 s'annule, la vitesse de déplacement de la zone éclairée 1602 sur la plaque 606 s'annule également, et cette zone est donc dans une des positions illustrées par les figures 18(a) et 18(g). Lorsque la vitesse de déplacement du point 1702 s'annule, la totalité du faisceau d'éclairage est donc supprimée. La plaque 606 agit comme un dispositif de limitation supprimant la partie du faisceau d'éclairage qui passe en-dehors d'une surface de sélection coïncidant avec la zone 1601 couverte par le réseau de miroirs microscopiques. Lorsque la vitesse de déplacement du point 1702 (ou de tout autre point équivalent) s'annule, la totalité de la zone 1602 éclairée par le faisceau d'éclairage est en-dehors de la surface de sélection 1601, et le faisceau d'éclairage 1601 est entièrement supprimé. La zone observée est donc traversée successivement par un ensemble de points éclairés qui la traversent chacun à vitesse constante. Les variations de vitesse des points éclairés sont effectivement supprimées par cette méthode.

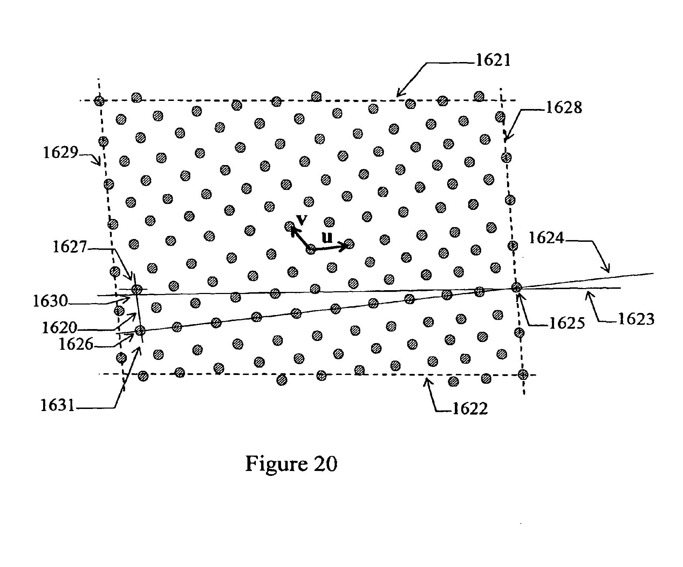

La figure 20 représente l'allure d'une partie du réseau de miroirs microscopiques réfléchissants 1601, dans le cas d'un réseau à maille hexagonale. Les vecteurs de base du réseau sont u et v, comme représentés sur la figure. Ce réseau comprend un ensemble de miroirs microscopiques réfléchissants, représentés en grisé. La droite 1623 passe par le centre du miroir microscopique 1625 et est orientée dans le sens du déplacement de la zone illuminée 1602 sur le réseau, qui est également le sens du déplacement de l'image géométrique sur le réseau d'un point fixe de l'objet observé. La droite 1624 est dirigée selon un vecteur de base du réseau et passe par le centre du miroir microscopique 1625. Le miroir microscopique 1627 est le premier miroir se trouvant sur une droite 1631 orthogonale à la droite 1624, et passant par le centre du miroir microscopique 1626. Le point 1630 est l'intersection des droites 1624 et 1623. On note :

D1 la distance entre le centre du miroir 1627 le point 1630.

D2 la distance entre le centre du miroir 1626 et le centre du miroir 1627.

N le nombre de miroirs microscopiques se trouvant sur la droite 1624 entre les points 1625 et 1626, y compris ces points.

Pour que les conditions de balayage soient optimales il faut que N soit suffisamment grand et vérifie en outre l'inégalité D1=D2/N. Par ailleurs, le réseau étant étendu au-delà des points indiqués sur la figure, le nombre total de points sur la droite 1624 doit être un multiple de N, et les limites du réseau doivent être orthogonales à la droite 1624.

Plus la zone 1601 est étendue dans le sens du déplacement de la zone éclairée 1602, plus la déperdition d'énergie lumineuse, liée à la non-réflexion du faisceau sur la plaque 606 aux points extrêmes du déplacement de la zone éclairée sur la plaque 606, peut être minimisée. Toutefois cette technique cause toujours une certaine déperdition d'énergie. Cette déperdition peut être évitée par exemple en modifiant le mouvement du miroir galvanométrique, et donc la trajectoire d'un point géométrique 1702 image du point 1604, de telle manière que la zone éclairée 1602 reste dans la zone 1601 couverte par le réseau de miroirs microscopiques. Toutefois, si le changement de direction du point 1702 aux points extrêmes de sa trajectoire n'est pas suffisamment rapide, cette technique crée des inhomogénéités d'éclairage dans l'objet observé et donc une variation de la "Point Spread Function" (PSF) tridimensionnelle en fonction du point considéré. Du fait que le réseau de miroirs microscopiques est périodique, la dépendance de cette PSF en fonction du point considéré est elle-même périodique. Les inhomogénéités d'éclairage peuvent être corrigées par des algorithmes de traitement d'image appropriés.

Les algorithmes de déconvolutions usuels consistent à calculer en chaque point de l'objet une valeur:

$$V(r_0) = \iiint D(r - r_0) I(r) d^3 r$$

ou $r_0$ est le vecteur position du point considéré, r est un vecteur position variable, ou la fonction de déconvolution $D(r - r_0)$ permet d'inverser la PSF, et ou $I(r)$ est l'image non déconvoluée obtenue à partir d'une série d'images confocales bidimensionnelles obtenues chacune pour un plan observé différent, un positionneur piézoélecrtique suivant l'axe z (vertical) étant utilisé pour l'acquisition d'une telle série d'images. Ce calcul peut se faire dans le domaine fréquentiel à l'aide de techniques de transformée de Fourier tridimensionnelles connues, ou dans le domaine spatial à l'aide de techniques de filtrage.

Lorsque les inhomogénéités d'éclairage ne sont pas trop fortes, ou lorsque le diamètre des miroirs microscopiques est faible (inférieur à une demi tache d'Airy), les inhomogénéités d'éclairage peuvent être compensées par une multiplication de l'image tridimensionnelle $I(r)$ par une fonction appropriée $C(r)$, périodique suivant les mêmes vecteurs de base que le réseau de points d'éclairage dans l'objet observé, et compensant directement les variations d'illumination. Cette fonction $C(r)$ peut être obtenue par exemple en observant un objet plat uniformément fluorescent, dont on obtient alors une image non déconvoluée $I_0$ (r) . On a alors $C(r) = \dfrac{1}{I_0(r)}$ · La multiplication de $I(r)$ par C($r$) peut être suivie ou non par une déconvolution du type habituel.

Dans le cas le plus général, la dépendance spatiale de la fonction de déconvolution transforme l'équation décrivant la déconvolution en:

$$V(r_0) = \iiint D(r_0^h; r - r_0) I(r) d^3 r$$

ou $D(r_0^h; r - r_0)$ est dépendante de la composante horizontale $r_0^h$ du vecteur $r_0$ mais est périodique en cette variable, à savoir:

$$D(r_0^h; r - r_0) = D(r_0^h + ku + lv; r - r_0)$$

ou $u$ et $v$ sont les vecteurs de base du réseau de points d'éclairage dans l'objet observé et ou k et $l$ sont des nombres entiers arbitraires. La fonction $D\left(r_0^h; r - r_0\right)$ peut être obtenue sur une maille du réseau périodique de points d'éclairage, ce qui permet ensuite de l'obtenir sur l'ensemble de l'objet. En chaque point d'une maille du réseau, elle peut être obtenue en inversant, dans le domaine fréquentiel (c'est-à-dire en représentation de Fourier), une PSF mesurée en ce point en déplaçant une microbille fluorescente autour du point, la valeur $P(r)$ de la PSF étant la valeur d'intensité mesurée au point de mesure lorsque la position de la microbille par rapport au point de mesure est définie par le vecteur $r$.

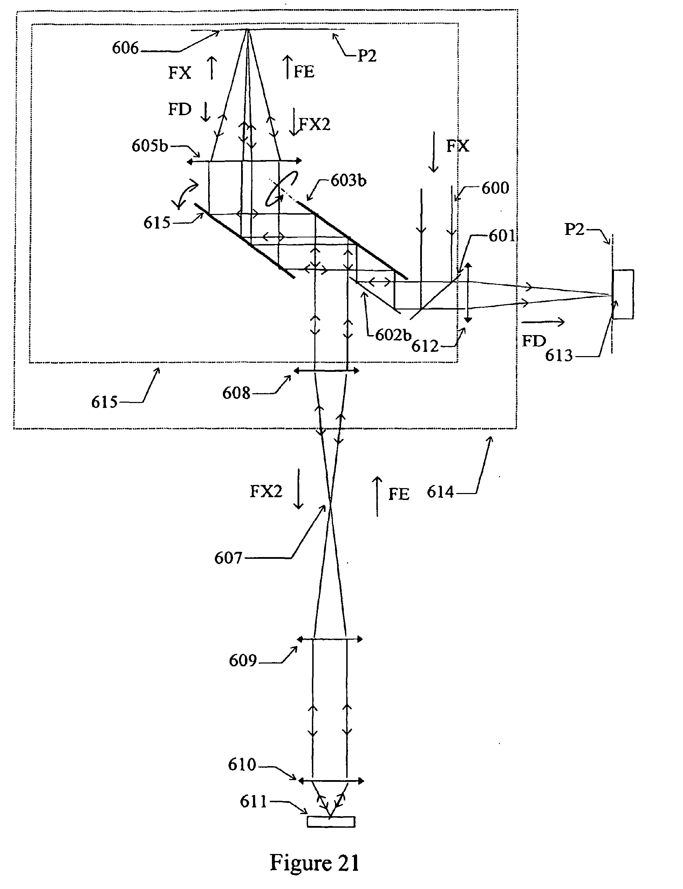

Le dispositif de la figure 17 peut être complété par un deuxième miroir galvanométrique, de manière à pouvoir effectuer un balayage bidimensionnel comme dans le deuxième mode de réalisation. Le schéma résultant est montré sur la figure 21 ou on a ajouté un miroir galvanométrique 615 et déplacé en conséquence les autres éléments. L'axe de rotation du miroir 615 est orthogonal à celui du miroir 603b. En commandant en quadrature les deux miroirs, il devient possible de faire suivre une trajectoire circulaire ou bidimensionnelle à chaque point éclairé. Cette trajectoire est par exemple similaire à la trajectoire 505 de la figure 14. L'avantage d'une telle trajectoire est qu'elle ne cause aucune déperdition d'énergie. Toutefois, cette trajectoire génère des inhomogénéités d'éclairage périodiques, qui peuvent être compensées comme précédemment en utilisant une fonction de déconvolution dépendant du point considéré ou en multipliant l'image non déconvoluée par une fonction de compensation des inhomogénéités d'éclairage.

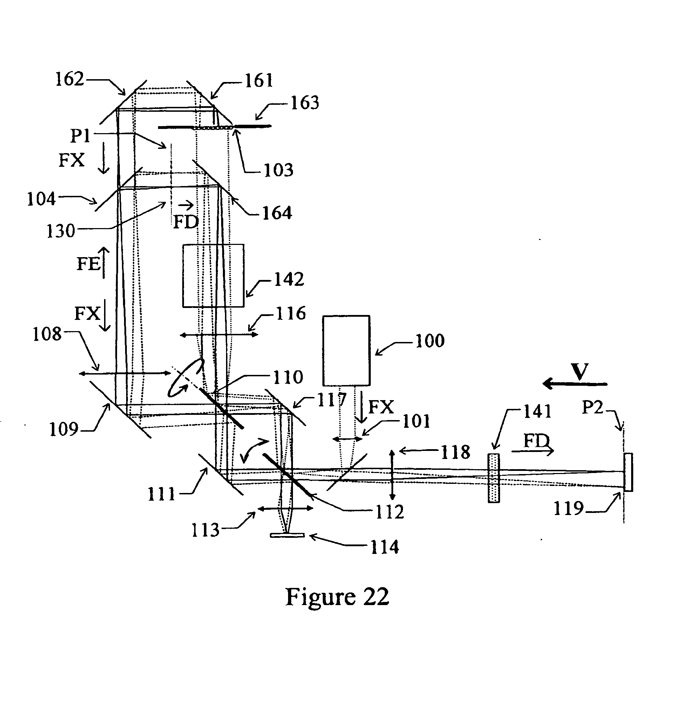

Une technique similaire peut être utilisée en éclairage laser, le faisceau d'éclairage devant alors être réfléchi une première fois sur les miroirs galvanométriques avant de parvenir au réseau de microlentilles. Un tel dispositif , dérivé de celui de la figure 1, est représenté sur la figure 22. Des miroirs 162 et 161 ont été ajoutés pour modifier la trajectoire du faisceau d'éclairage, et le laser 100 et la lentille 101 ont été placés en amont des miroirs galvanométriques. Le miroir 115 a été remplacé par un séparateur de faisceau dichroïque 164. De préférence, le faisceau laser issu de 100, représenté en pointillés épais, est focalisé par la lentille 101 sur le miroir galvanométrique 112, qui est seul mobile et qui est également dans un plan focal de la lentille 116. Le mouvement angulaire du miroir galvanométrique se traduit alors par un déplacement du faisceau d'éclairage sur le réseau de microlentilles 103. Si le réseau de microlentilles 103 est prolongé par un diaphragme absorbant 163, alors il suffit d'amener le faisceau laser d'éclairage entièrement sur le diaphragme 163, pour générer une extinction. Ceci permet donc comme précédemment d'éteindre le faisceau aux extrémités de la trajectoire.

## Mode de réalisation simplifié avec un dispositif de filtrage spatial constitué d'un réseau de trous micoscopiques.

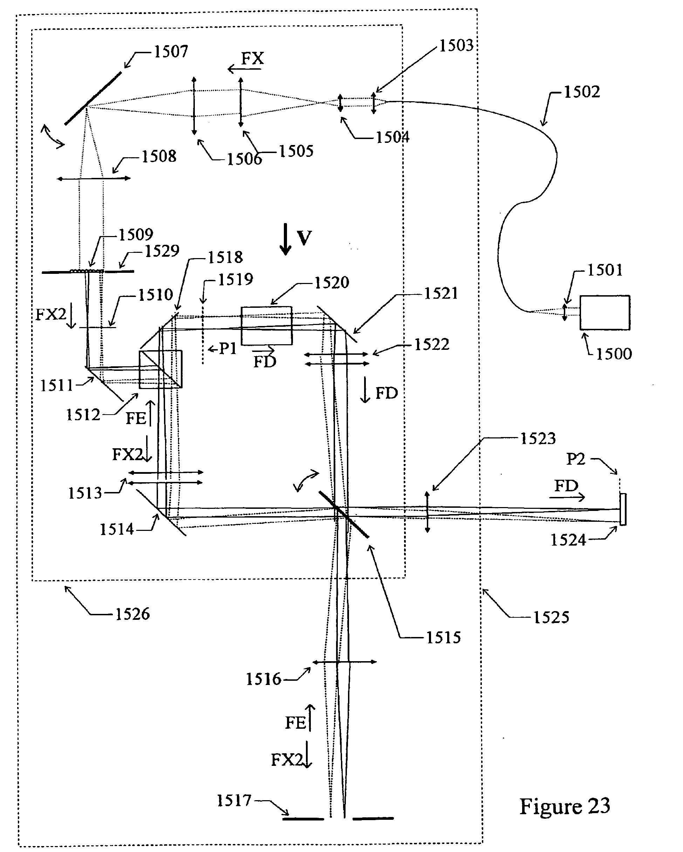

Le mode de réalisation de la figure 23 est un mode de réalisation simplifié en lumière laser, ne comprenant qu'un seul miroir galvanométrique, et utilisant comme système de filtrage spatial un réseau de trous microscopiques. Du fait de sa simplicité, en particulier en termes de synchronisation et en ce qui concerne le nombre de miroirs galvanométriques utilisés, il constitue un mode de réalisation préféré en éclairage laser.

Le faisceau d'éclairage FX issu du laser 1500 est couplé par l'intermédiaire d'une lentille 1501 à une fibre optique 1502 qui le transporte jusqu'au dispositif de balayage. Il est alors transformé en un faisceau parallèle par les lentilles 1503, 1504, 1505. Il est refocalisé par la lentille 1506 sur le miroir galvanométrique 1507 qui le réfléchit. Il traverse la lentille 1508 dont le plan focal objet est sur le miroir 1507. Il parvient au réseau de microlentilles 1509 placé dans le plan focal image de la lentille 1508.

Il est divisé par ce réseau de micro-lentilles en une pluralité de sous-faisceaux d'éclairage FX2, qui est ensuite réfléchie par le miroir 1511 puis par le miroir dichroïque 1512. Il traverse la lentille 1513 formée de deux lentilles séparées dont on peut ajuster la séparation afin d'ajuster précisément la distance focale. Il est réfléchi par le miroir 1514 puis par le miroir galvanométrique 1515, traverse une lentille 1516 puis un diaphragme 1517. La lentille 1516 a un plan focal sur le miroir 1515 et un autre plan focal sur le diaphragme 1517. La lentille 1513 a un plan focal dans le plan de focalisation 1510 des sous-faisceaux issus du réseau de microlentilles 1509, et un autre plan focal sur le miroir galvanométrique 1515. Le diaphragme 1517 est monté dans un plan image du microscope, et le faisceau traversant ce diaphragme parvient ensuite, par la lentille de tube et l'objectif, à l'échantillons, ces éléments n'étant pas représentés sur le dessin.

Le faisceau lumineux FE émis par fluorescence par l'échantillon parvient à son tour au plan image ou se trouve le diaphragme 1517, via l'objectif et la lentille de tube. Il est réfléchi par le miroir galvanométrique 1515, par le miroir 1514, traverse la lentille 1513 et le cube dichroïque 1512, est réfléchi par le miroir 1518, traverse le réseau de trous microscopiques 1519.

Le faisceau à détecter FD issu de ce réseau de trous microscopiques traverse ensuite l'ensemble de miroirs 1520 représenté sur la figure 3 en vue suivant la direction V. Il est réfléchi par le miroir 1521, traverse la lentille 1522 identique à la lentille 1513, est réfléchi par la seconde face du miroir galvanométrique 1515, traverse la lentille 1523, et est focalisé sur un capteur 1524 situé dans un plan focal image de la lentille 1523.

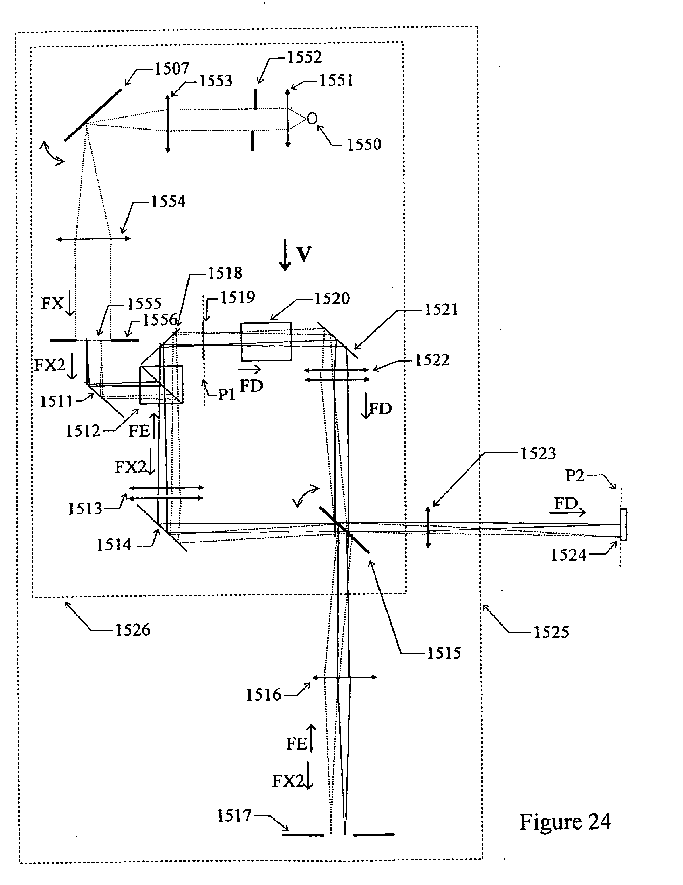

Le dispositif peut être modifié comme indiqué sur la figure 24 de manière à permettre l'observation en lumière blanche réfléchie. Sur le dispositif de la figure 24 le faisceau d'éclairage FX provenant d'une source de lumière incohérente 1550, par exemple une lampe à arc au Xénon, traverse ensuite une lentille 1551 et un diaphragme 1552, puis une lentille 1553. Le faisceau d'éclairage traverse ensuite la lentille 1554 et parvient au réseau de trous microscopiques 1555 qui le sépare en une pluralité de sous-faisceaux et qui est placé dans un plan focal image commun des lentilles 1554 et 1513. Le cube dichroïque 1512 est remplacé par un cube séparateur neutre en longueur d'onde, par exemple semi-réfléchissant. Le dispositif ainsi modifié permet l'observation en lumière réfléchie. Il constitue un mode de réalisation préféré pour l'observation en lumière réfléchie, pour laquelle il est préférable au dispositif de la figure 17 qui ne peut pas éliminer totalement la "stray light".

Que l'on utilise la lumière blanche réfléchie ou la fluorescence excitée par laser, les points d'éclairage dans l'objet doivent être suffisamment rapprochés les uns des autres et le réseau de points d'éclairage dans l'objet doit être correctement orienté par rapport à la direction du déplacement de ces points qui est généré par le mouvement du miroir galvanométrique 1515. Ceci permet l'utilisation de la technique de balayage à un seul miroir, sur le principe déjà décrit sur la figure 14. Le miroir galvanométrique 1507 a pour vocation de permettre le déplacement de la zone éclairée sur le dispositif de séparation du faisceau en sous-faisceaux, qui peut être indifféremment le réseau de lentilles 1509 ou le réseau de points microscopiques 1555, de manière à pouvoir utiliser la technique décrite sur la figure 18, ou la partie transparente de la plaque transparente 1600 est maintenant remplacée par un diaphragme 1556 ou 1529, et ou la zone 1601 de cette plaque est remplacée par le réseau de trous microscopiques 1555 ou le réseau de micro lentilles 1509. Le miroir galvanométrique 1507 doit être synchronisé avec le miroir galvanométrique 1515 et l'amplitude de son déplacement doit être appropriée, de manière à ce que la zone éclairée dans l'objet, correspondant à l'image géométrique de la zone éclairée dans le plan 1510 ou sur le réseau de trous microscopiques 1555, soit fixe.

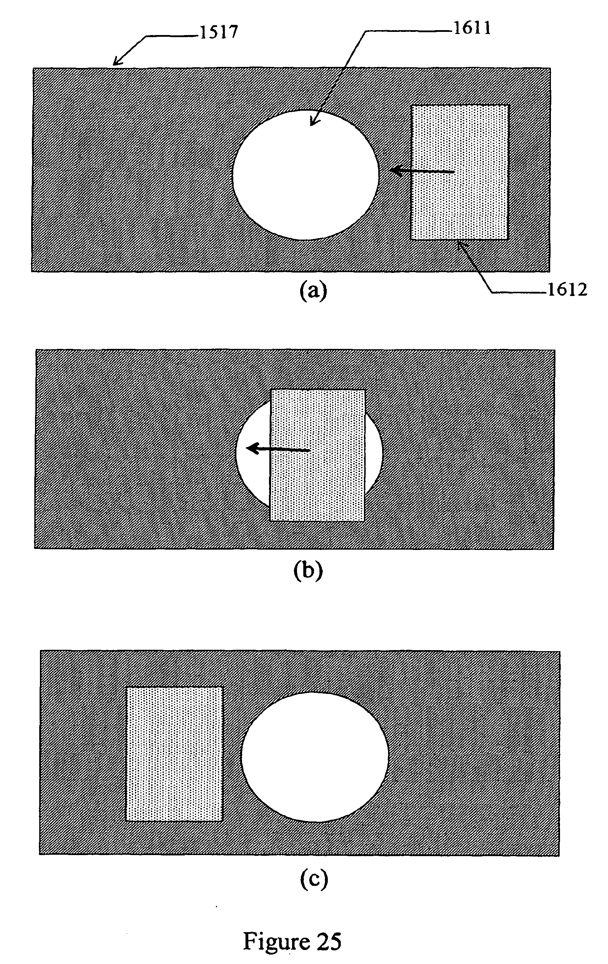

Il est également possible de ne pas utiliser le miroir 1507 ou de le remplacer par un miroir fixe. La technique de balayage de l'échantillon est alors modifiée et le diaphragme 1517 est utilisé pour délimiter la zone observée. La figure 25 illustre la technique de balayage qui peut alors être utilisée. Du fait du mouvement du seul miroir 1515, la zone éclairée sur l'échantillon se déplace. La figure 25 (a) représente le diaphragme 1517 comportant une ouverture 1611, ainsi que la zone éclairée 1612 qui est constituée d'un réseau de points microscopiques éclairés se déplaçant sur le diaphragme. Lorsque le miroir est dans une position extrême de son mouvement oscillant, la zone éclairée 1612 est dans la position indiquée par la figure 25 et la pluralité de sous-faiscaux d'éclairage est entièrement arrêtée par le diaphragme. Lorsque le miroir tourne, la zone éclairée 1612 se déplace et traverse l'ouverture du diaphragme comme indiqué sur la figure 25(b). La zone éclairée parvient alors de l'autre coté du diaphragme, comme indiqué sur la figure 25(c), et sa vitesse de déplacement s'annule alors. La vitesse de déplacement ne s'anulant que pour les positions extrêmes de la zone éclairée sur le diaphragme, dans lesquelles le faisceau d'éclairage est entièrement arrêté par le diaphragme, l'ouverture du diaphragme se trouve balayée par des points se déplaçant à vitesse à peu près constante. Le diaphragme 1517 constitue içi un dispositif de limitation arrêtant la partie du faisceau d'éclairage qui passe en dehors d'une surface de sélection constituée par son ouverture.

Plus la zone éclairée 1612 est étroite, plus la déperdition de lumière peut être minimisée. Néanmoins, plus cette zone est étroite plus la densité du réseau de points d'éclairage doit être élevée, ce qui limite l'étroitesse de la zone. En général, la solution consistant à utiliser le miroir 1507, bien que plus coûteuse, est techniquement préférable.

Le dispositif de balayage confocal peut par exemple comprendre l'ensemble des éléments contenus dans la zone délimitée sur la figure par le pointillé 1525. Dans ce cas l'utilisateur doit simplement relier au scanner une caméra, un microscope, et une source d'éclairage. Toutefois, le dispositif de balayage confocal peut également se limiter à l'ensemble délimité sur la figure par les pointillés 1526. Dans ce cas, l'utilisateur doit également relier au dispositif des lentilles 1516 et 1523 fournies séparément. L'avantage de cette solution est que la liaison se fait dans une zone afocale, ce qui la rend moins sensible aux erreurs de positionnement, et que les utilisateurs peuvent choisir les lentilles utilisées, ce qui leur permet par exemple de modifier le grossissement du système.

## Moyens pour modifier les caractéristiques de filtrage spatial et/ou les caractéristiques de division du faisceau d'éclairage en sous-faisceaux.

Dans l'ensemble des modes de réalisation il est possible de modifier les caractéristiques de filtrage spatial et éventuellement les caractéristiques du système de division du faisceau en sous-faisceaux. Par exemple, le premier système de filtrage spatial peut être monté de manière amovible, pour être échangeable manuellement. Toutefois, il est souvent souhaitable que !a modification du système de filtrage spatial puisse être commandée, par exemple à l'aide d'un moteur électrique.

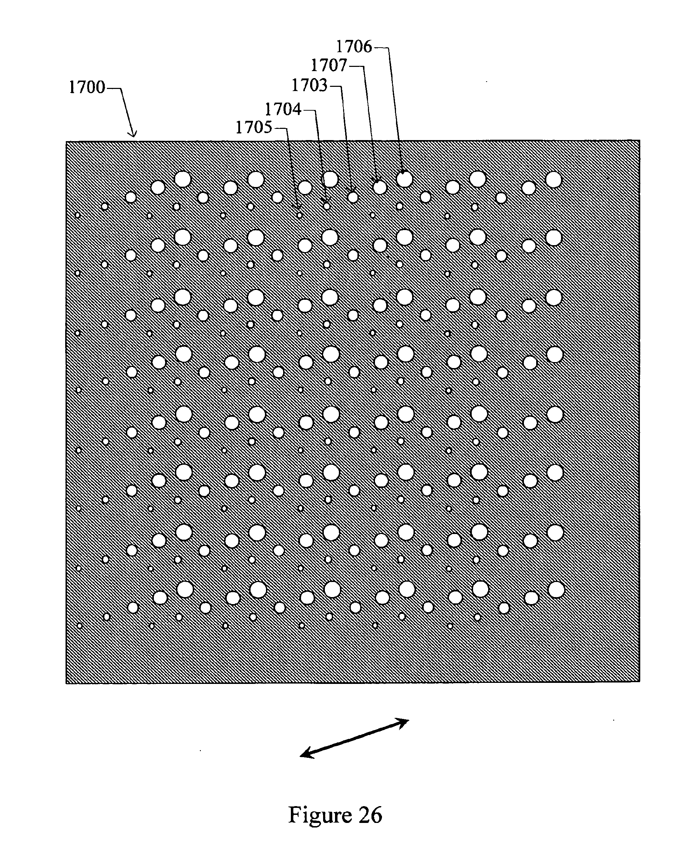

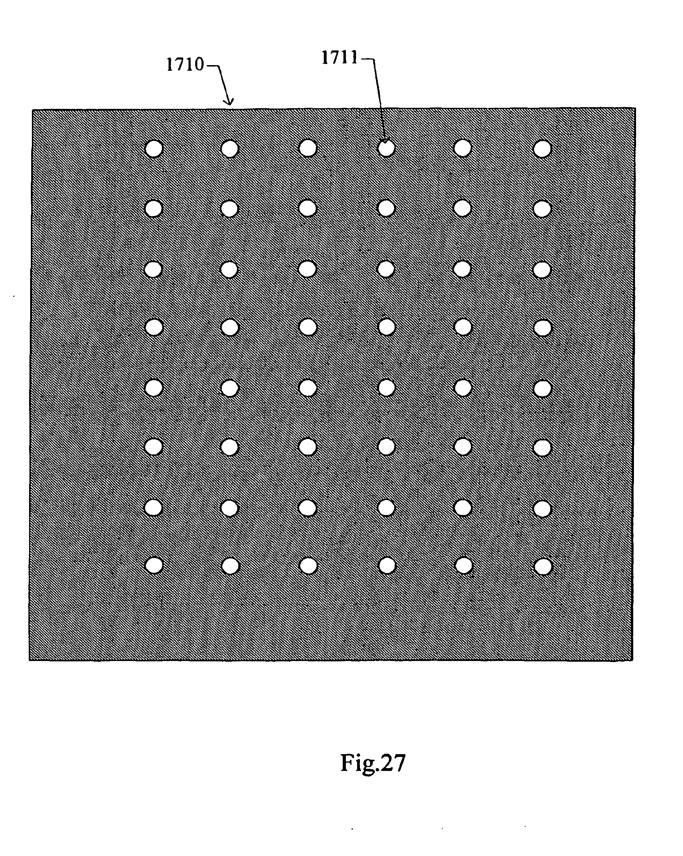

Par exemple, lorsque le système de filtrage spatial est un réseau de trous microscopiques, par exemple le réseau 130 de la figure 1 ou le réseau 1519 de la figure 24, il peut être constitué de deux plaques 1700 et 1710 glissant l'une contre l'autre, la position relative de ces plaques permettant de contrôler la taille des trous microscopiques. La première plaque 1700 est représentée sur la figure 26. Elle comporte par exemple les trous microscopiques 1703 à 1707. La deuxième plaque 1710 est représentée par la figure 27 et comporte par exemple le trou microscopique 1711. Lorsque les deux plaques 1700 et 1710 sont placées l'une contre l'autre, et lorsque le trou 1706 est amené en regard du trou 1711, le filtre spatial formé par l'ensemble des deux plaques est identique à celui qui serait formé par la plaque 1710 seule, chacun des trous microscopiques de la plaque 1710 étant en regard d'un trou de même diamètre de la plaque 1700. Lorsque la plaque 1700 est déplacée suivant la direction de la flèche indiquée sur la figure 27, le trou 1707 peut être mis en regard du trou 1711. Le trou 1707 ayant un diamètre inférieur au trou 1711, le diamètre du trou centré sur 1711, dans l'ensemble formé des deux plaques 1700 et 1710, est limité par le trou 1707. L'ensemble constitué par les deux plaques 1700 et 1710 est alors un réseau de trous microscopiques, mais le diamètre de chaque trou de ce réseau est celui du trou 1707. En amenant successivement en regard du trou 1711 les trous 1703, 1704, 1705, il est possible de donner différentes valeurs au diamètre de chaque trou microscopique du réseau formé par l'assemblage des deux plaques 1700 et 1710 placées l'une contre l'autre. Chacune de ces deux plaques peut par exemple être obtenue par dépôt d'une couche métallique sur une vitre de verre, suivi d'une opération de litographie optique permettant d'obtenir les trous microscopiques. Lorsque les deux plaques sont placées l'une contre l'autre, les couches métalliques des deux vitres doivent de préférence être en contact direct, une couche d'huile optique pouvant éventuellement faciliter leur mouvement relatif Le mouvement relatif des deux plaques peut par exemple être commandé à l'aide d'un positionneur utilisant un moteur électrique pas à pas.

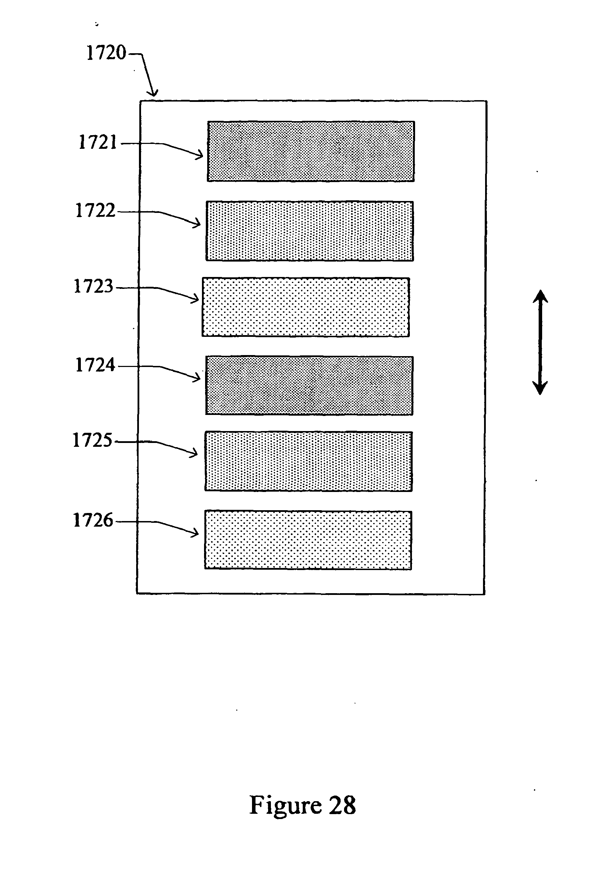

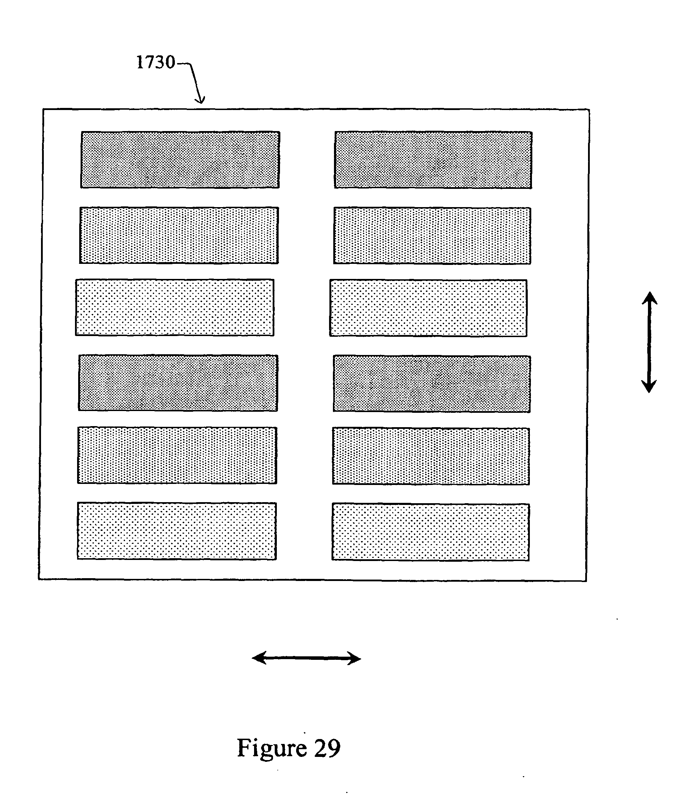

Lorsque le système de filtrage spatial est un réseau de miroirs microscopiques 606 comme sur la figure 17, il n'est pas possible d'utiliser la méthode précédente. Le système de filtrage spatial peut alors être constitué d'une plaque 1720 représentée sur la figure 28, et comportant plusieurs réseaux de miroirs microscopiques 1721 à 1726. La plaque 1720 peut être montée sur un dispositif de positionnement une dimension, comprenant de préférence un rail de guidage, motorisé à l'aide d'un moteur électrique, et permettant son déplacement dans le sens de la flèche indiquée sur la figure 28. En déplaçant la plaque suivant la flèche indiquée sur la figure 28, on peut amener successivement chacune des zones 1721 à 1726 sur le chemin du faisceau d'éclairage. Les réseaux de miroirs microscopiques 1721 à 1726 peuvent différer entre eux par le diamètre des miroirs microscopiques et/ou par les vecteurs de base des réseaux, et donc la densité des réseaux. De manière équivalente, on peut utiliser une plaque 1730, représentée sur la figure 29, pouvant être déplacée suivant deux directions, et pouvant donc comprendre d'avantage de réseaux de miroirs microscopiques. Les réseaux de miroirs microscopiques peuvent être réalisés chacun sur une vitre et être superposés sur une plaque porteuse 1720 ou 1730. Ils peuvent également être réalisés directement sur la plaque porteuse. Si le système de filtrage spatial est un réseau de trous microscopiques, un dispositif équivalent peut être réalisé, dans lequel les réseaux de miroirs microscopiques sont remplacés par des réseaux de trous microscopiques. Un positionnement constant et précis des trous microscopiques est plus difficile à obtenir avec ce système qu'avec le système formé de deux plaques parallèles représentées sur les figures 26 et 27. Il est donc préférable d'utiliser cette technique lorsque le système de filtrage spatial joue en même temps le rôle de filtre spatial et de dispositif de division du faisceau, comme sur le dispositif 606 de la figure 17 ou le dispositif 105 de la figure 13.

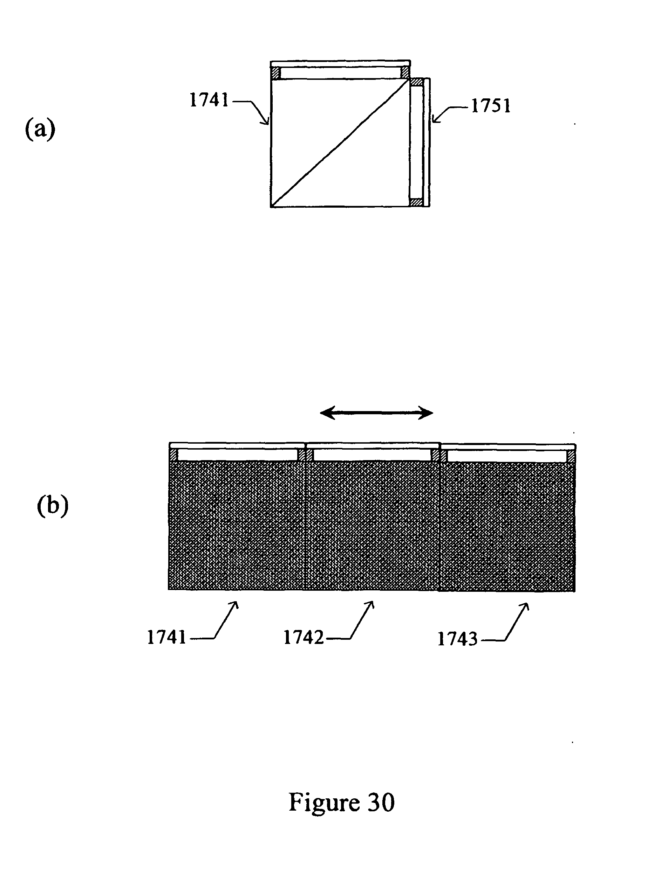

Dans les autres cas, un dispositif d'échange de filtre nécessitant une précision mécanique modérée peut également être conçu, mais le système de filtrage spatial et le dispositif de séparation des faisceaux d'éclairage en sous-faisceaux doivent de préférence être solidarisés dans un bloc mobile échangeable. Par exemple, dans le dispositif de la figure 11, les réseaux de trous microscopiques 105 et 130 ainsi que le miroir dichroïque 104 peuvent être solidarisés en un seul bloc représenté sur la figure 12. Plusieurs de ces blocs peuvent être associés comme indiqué sur la figure 30 qui montre un ensemble de trois blocs 1741, 1742, 1743 solidarisés, et déplaçables d'un seul tenant. La figure 30 (a) est une vue de coté (même direction d'observation que sur la figure 11) et la figure 30(b) est une vue de coté suivant la direction V indiquée sur la figure 11. En déplaçant l'ensemble suivant la direction indiquée sur la figure 30(b), on peut amener l'un ou l'autre des trois blocs sur le chemin du faisceau lumineux. L'ensemble peut être inclus dans un dispositif mécanique assurant en particulier une diaphragmation adaptée, de manière à ce que les cubes non utilisés ne reçoivent pas de lumière, et permettant un déplacement motorisé. Les cubes 1741 à 1743 peuvent différer entre eux par le diamètre des trous microscopiques ou la densité des réseaux de trous microscopiques. Chaque cube comporte un réseau de trous microscopiques 1751 constituant le premier filtrage spatial, qui est monté mobile solidairement avec le dispositif de séparation du faisceau en sous-faisceaux et le miroir dichroïque. Dans le cas ou un réseau de microlentilles est utilisé comme sur la figure 1, un dispositif similaire peut être réalisé, le réseau de microlentilles, le filtre spatial et le miroir dichroïque étant intégré dans un bloc, et plusieurs blocs étant intégrés en un ensemble mobile.

## Applications industrielles

Le présent dispositif de balayage optique, intégré à un microscope confocal, peut être utilisé pour l'imagerie en fluorescence et en temps réel d'objets biologiques. Equipé d'un éclairage laser, il permet une imagerie à la vitesse la plus élevée. Equipé d'éclairage incohérent, il permet une imagerie en fluorescence avec une gamme complète de longueurs d'ondes d'excitation. L'image confocale obtenue à l'aide du présent dispositif se prête bien à l'utilisation d'algorithmes de déconvolution tridimensionnelle qui permettent d'en accroître la résolution. Le présent dispositif de balayage optique, dans une version adaptée, peut également être utilisé pour l'imagerie en réflexion, par exemple pour l'observation de circuits en microélectronique, ou pour l'observation en profondeur d'échantillons vivants (peau par exemple) auquel cas c'est le faisceau lumineux diffracté vers l'arrière par l'objet observé qui est mesuré.

**Revendications**

1. Dispositif à balayage optique confocal destiné à permettre une visualisation d'une zone observée d'un objet observé (114), comprenant:

   a) des moyens (103) pour diviser un faisceau d'éclairage (FX) en une pluralité de sous-faisceaux d'éclairage (FX),
   b) des moyens optiques (108,113) pour focaliser lesdits sous-faisceaux d'éclairage sur une pluralité de points d'éclairage dans l'objet observé,
   c) des moyens optiques (113,108) pour focaliser en une pluralité de points lumineux d'un premier plan image (P1) une pluralité de sous-faisceaux lumineux (FE) issus de la pluralité de points d'éclairage,
   d) un dispositif de filtrage spatial (130) disposé dans le premier plan image et sélectionnant la lumière atteignant les points lumineux, pour former une pluralité de sous-faisceaux à détecter (FD),
   e) des moyens optiques (116,118) pour focaliser la pluralité de sous-faisceaux à détecter sur une pluralité de points à détecter dans un second plan image, et
   f) au moins un miroir monté mobile en rotation (110, 112) réfléchissant :

      i) la pluralité de sous-faisceaux d'éclairage dirigés vers l'objet observé, pour que la pluralité de points d'éclairage balaye l'objet observé,
      ii) la pluralité de sous-faisceaux lumineux, pour que la pluralité de points lumineux soit fixe dans le premier plan image, et
      iii) la pluralité de sous-faisceaux à détecter, pour que la pluralité de points à détecter balaye le second plan image ;

   ledit dispositif étant **caractérisé par** les faits suivants :

   - les moyens pour diviser le faisceau d'éclairage en une pluralité de sous-faisceaux d'éclairage sont adaptés pour que la pluralité de points d'éclairage (503) forme un réseau périodique à deux dimensions,
   - ledit miroir monté mobile est adapté pour déplacer chacun des points d'éclairage suivant une ligne droite (500), et
   - ladite ligne droite est non parallèle aux vecteurs de base dudit réseau périodique ($u,v$).

2. Dispositif suivant la revendication 1, **caractérisé par le fait qu'**il est adapté pour que chaque point d'éclairage (1802) traverse entièrement la zone observée (1801) lors du balayage de l'objet observé.

3. Dispositif selon l'une des revendications 1 ou 2, comprenant des moyens (603) pour déplacer une zone (1602) illuminée par le faisceau d'éclairage sur les moyens (1601) pour diviser le faisceau d'éclairage en sous-faisceaux.

4. Dispositif selon la revendication 3, dans lequel les moyens pour déplacer la zone illuminée par le faisceau d'éclairage sur les moyens pour diviser le faisceau d'éclairage en sous-faisceaux sont adaptés pour que la zone éclairée dans l'objet observé reste fixe lorsque ledit miroir monté mobile en rotation (603) tourne.

5. Dispositif selon une des revendications 3 ou 4, dans lequel les moyens pour déplacer la zone illuminée par le faisceau d'éclairage sur les moyens pour diviser le faisceau d'éclairage en sous-faisceaux comprennent ledit miroir (603) monté mobile en rotation, et dans lequel le système optique est adapté pour que le faisceau d'éclairage soit réfléchi, avant de parvenir sur les moyens pour diviser le faisceau d'éclairage en sous-faisceaux, par ledit miroir monté mobile en rotation.

6. Dispositif suivant une des revendications 3 à 5, dans lequel les moyens pour déplacer la zone (1602) illuminée par le faisceau d'éclairage sur les moyens (1601) pour diviser le faisceau d'éclairage en sous-faisceaux sont des moyens pour balayer, adaptés pour balayer répétitivement lesdits moyens pour diviser avec ledit faisceau d'éclairage, et sont synchronisés avec le mouvement du miroir monté mobile en rotation.

7. Dispositif selon une des revendications 1 à 6, comprenant des moyens pour supprimer le faisceau d'éclairage avant qu'il ne parvienne à l'objet observé, et dans lequel ces moyens sont adaptés pour supprimer le faisceau d'éclairage lorsque la vitesse de déplacement de l'image géométrique, dans l'objet observé, d'un point géométrique fixe du premier plan image, atteint sa valeur minimale.

8. Dispositif selon la revendication 7, dans lequel les moyens pour supprimer le faisceau d'éclairage sont formés par

EP 1 330 671 B1

un dispositif de limitation (606) disposé pour être atteint par le faisceau d'éclairage, ledit dispositif de limitation comprenant des moyens pour supprimer la partie du faisceau d'éclairage qui n'atteint pas une surface de sélection (1601), dans lequel le dispositif de limitation, le système optique, et le mouvement du miroir monté mobile en rotation sont adaptés pour que la zone (1602) éclairée par le faisceau d'éclairage sur le dispositif de limitation se trouve en-dehors de la surface de sélection (1601) lorsque la vitesse de déplacement de l'image géométrique (1702), dans l'objet observé, d'un point géométrique fixe du premier plan image, atteint sa valeur minimale.

**9.** Dispositif suivant la revendication 6 et la revendication 8, dans lequel:

- le dispositif de limitation comprend deux zones de limitation adjacentes aux moyens pour diviser, le faisceau d'éclairage atteignant les zones de limitation ne pouvant continuer son chemin vers le miroir monté mobile,
- la surface de sélection est constituée par les moyens pour diviser (1601),
- les moyens pour balayer, avec ledit faisceau d'éclairage, les moyens pour diviser, sont adaptés pour que, pendant chaque balayage des moyens pour diviser par le faisceau d'éclairage, la zone (1602) éclairée par le faisceau d'éclairage parte d'une première zone de limitation (Fig.23 a), traverse les moyens pour diviser (Fig. 23 b-f), et parvienne à une seconde zone de limitation (Fig 23 g).

**10.** Dispositif suivant la revendication 8,

- le dispositif de limitation étant un diaphragme de champ (1517) traversé par les faisceaux d'illumination sur leur trajet du miroir monté mobile vers l'objet observé,
- la surface de sélection étant l'ouverture (1611) dudit diaphragme de champ,
- les sous-faisceaux d'éclairage étant focalisés sur le diaphragme de champ, et
- le mouvement du miroir monté mobile étant adapté pour que les sous-faisceaux d'éclairage (1612) scannent le diaphragme de champ en partant d'une partie du diaphragme de champ qui arrête tous les sous-faisceaux d'éclairage, en traversant l'ouverture du diaphragme de champ, et en terminant sur une partie du diaphragme de champ qui arrête tous les sous-faisceaux d'éclairage.

**11.** Dispositif selon une des revendications 1 à 10, dans lequel le dispositif de filtrage spatial est un réseau de trous microscopiques.

**12.** Dispositif suivant la revendications 11, dans lequel le premier dispositif de filtrage spatial comporte une première plaque (1700) absorbante et/ou réfléchissante, pourvue d'une pluralité de trous microscopiques (1706,1707), et une deuxième plaque (1710) comprenant des parties absorbantes et/ou réfléchissantes, et des parties transparentes (1711), dans lequel ces deux plaques sont placées l'une contre l'autre, et mobiles l'une par rapport à l'autre, pour que les parties absorbantes et/ou réfléchissantes de la deuxième plaque obturent une partie des trous microscopiques de la première plaque, et pour que le déplacement relatif des deux plaques permette de modifier les trous microscopiques laissés libre.

**13.** Dispositif suivant une des revendications 11 à 12,

- comprenant un premier groupe de lentilles (108) constitué par toutes les lentilles traversées par les sous-faisceaux d'éclairage entre le miroir monté mobile et le premier dispositif de filtrage spatial, ledit premier groupe ayant une distance focale positive,
- comprenant un deuxième groupe de lentilles (116) constitué par toutes les lentilles traversées par les sous-faisceaux à détecter entre le dispositif de filtrage spatial et le miroir monté mobile en rotation, ledit deuxième groupe de lentilles ayant une distance focale positive,
- comprenant une pluralité de miroirs (109,104,115, 143-147) redirigeant le faisceau lumineux et les sous-faisceaux à détecter pour ramener les sous-faisceaux à détecter vers une face du miroir monté mobile opposée à la face qui réfléchit les sous-faisceaux lumineux,
- ladite pluralité de miroirs étant adaptée pour que l'image géométrique, dans le second plan image, d'un point géométrique fixe de l'objet observé, soit indépendante de la position du miroir monté mobile en rotation autour de trois axes non coplanaires.

**14.** Dispositif suivant la revendication 13, chaque face du miroir monté mobile se trouvant dans une zone afocale, les sous-faisceaux étant parallèles lorsqu'ils se réfléchissent sur le miroir monté mobile en rotation.

**15.** Dispositif suivant une des revendications 11 à 14, comprenant un réseau de microlentilles auxiliaires (131) traversées par la pluralité de sous-faisceaux à détecter, chaque microlentille auxiliaire focalisant un sous-faisceau à détecter correspondant sur un trou microscopique du dispositif de filtrage spatial.

16. Dispositif suivant une des revendications 1 à 15,

   - le faisceau d'éclairage étant un faisceau laser,
   - comprenant une roue tournante (106) comportant des variations d'épaisseur et placée dans un plan ou les sous-faisceaux d'éclairage sont focalisés,

17. Dispositif suivant une quelconque des revendications 1 à 16, dans lequel les moyens pour diviser sont un réseau de microlentilles (103), et comprenant également un réseau de trous microscopiques auxiliaire (105) placé dans un plan dans lequel les sous-faisceaux d'éclairage sont focalisés, chaque trou microscopique dudit réseau auxiliaire étant traversé par un sous-faisceau d'éclairage correspondant.

18. Dispositif suivant une des revendications 1 à 17, dans lequel le dispositif de filtrage spatial (130 ; 606; 1720 ; 1751) est monté de manière mobile ou amovible, pour être remplacé par un autre dispositif de filtrage spatial.

19. Dispositif suivant une des revendications 1 à 18, comprenant une séparatrice (104 ; 400) pour séparer la pluralité de sous-faisceaux d'éclairage (FX) dirigée vers l'objet observé, du faisceau lumineux (FE) provenant de l'objet observé et dirigé vers le premier dispositif de filtrage spatial (130; 403), afin que le premier dispositif de filtrage spatial ne soit pas atteint par le faisceau d'éclairage ou la pluralité de sous-faisceaux d'éclairage.

20. Dispositif suivant la revendication 19, dans lequel .

   - le premier dispositif de filtrage spatial est une plaque absorbante et/ou réfléchissante pourvue d'une pluralité de trous microscopiques traversés dans un seul sens par le faisceau lumineux (FE).
   - les moyens (105 ;402) pour diviser le faisceau d'éclairage en une pluralité de sous-faisceaux, le premier dispositif de filtrage spatial, et la séparatrice , sont solidaires les uns des autres et font partie d'un ensemble de division et de filtrage, et dans lequel l'ensemble de division et de filtrage est monté de manière amovible ou mobile, pour être remplacé par un autre ensemble de division et de filtrage.

21. Dispositif selon une des revendications 1 à 12, **caractérisé par le fait que** les moyens pour diviser le faisceau d'éclairage en une pluralité de sous-faisceaux d'éclairage sont formés par le dispositif de filtrage spatial (606), et **par le fait que** le dispositif de filtrage spatial est monté de manière amovible ou mobile, pour être remplacé par un autre dispositif de filtrage spatial.

22. Dispositif suivant une des revendications 1 à 10, dans lequel:

   - le premier dispositif de filtrage spatial (606) comporte une plaque non absorbante pourvue d'une pluralité de miroirs microscopiques réfléchissants (650),
   - les moyens pour diviser sont constitués par le dispositif de filtrage spatial,
   - ledit au moins un miroir (603) monté mobile comporte une face de réflexion qui réfléchit la pluralité de sous-faisceaux d'éclairage (FX2) provenant du dispositif de filtrage spatial et dirigés vers l'objet observé, la pluralité de sous-faisceaux lumineux (FE) provenant de l'objet observé et dirigés vers le premier dispositif de filtrage spatial, et la pluralité de sous-faisceaux à détecter (FD) provenant du dispositif de filtrage spatial et dirigé vers le second plan image (P2).

23. Dispositif suivant la revendication 22, dans lequel la face de réflexion réfléchit le faisceau d'éclairage (FX) dirigé vers le dispositif de filtrage spatial

24. Dispositif suivant une des revendications 1 à 14 ou 21 à 23,

   - dans lequel les moyens pour diviser sont constitués par le dispositif de filtrage spatial,
   - dans lequel le miroir monté mobile en rotation réfléchit le faisceau d'éclairage en direction du dispositif de filtrage spatial,
   - comprenant un miroir séparateur (601) dichroïque ou partiellement transparent,
   - dans lequel le faisceau d'éclairage (FX) traverse ou est réfléchi par le miroir séparateur sur son chemin vers le miroir monté mobile, et

- dans lequel la pluralité de sous-faisceaux à détecter (FD) traverse ou est réfléchie par le miroir séparateur entre le miroir monté mobile et le deuxième plan image (P2).

25. Dispositif selon une des revendications 1 à 24, comprenant un moyen (140) pour atténuer ou éteindre la totalité du faisceau d'éclairage, ce moyen pour atténuer ou éteindre étant commandé en fonction du mouvement du miroir monté mobile pour permettre un éclairage uniforme de l'objet observé.

**Claims**

1. Confocal optical scanning device designed to allow the visualization of an observed object (114), comprising:

   a) means (103) for splitting an illuminating beam (FX) into a plurality of illuminating sub-beams (FX),
   b) optical means (108, 113) for focusing said illuminating sub-beams onto a plurality of illuminated points in the observed object.
   c) optical means (108,113) to focus a plurality of luminous sub-beams (FE) coming from the plurality of illuminated points on to a plurality of luminous points in a first image plane (P1),
   d) a spatial filtering device (130) arranged in the first image plane and selecting the light reaching the luminous points to obtain a plurality of sub-beam to be detected (FD),
   e) optical means (116, 118) to focus the plurality of sub-beams to be detected onto a plurality of points to be detected in a second image plane, and
   f) at least one rotatably mounted mobile mirror (110, 112) reflecting:

      i) the plurality of illuminating sub-beams directed towards the observed object, to make the plurality of illuminating sub-beams scan the observed object,
      ii) the plurality of luminous sub-beams, to make the plurality of luminous points be fixed in the first image plane, and
      iii) the plurality of sub-beams to be detected, to make the plurality of points to be detected scan the second image plane;

   said device being **characterized by** the following facts:

      - the means foro splitting the illuminating beam into a plurality of illuminating sub-beams are adapted so that the plurality of illuminated points forms a two-dimensional periodic array,
      - said rotatably mounted mobile mirror is adapted to move each of said illuminated points along a straight line (500), and
      - said straight line is not parallel to the director vectors (u, v) of the periodic array.

2. Device according to claim 1, **characterized by** the fact that it is adapted so that each illuminating point (1802) entirely crosses an observed area (1801) during the scan of the observed object.

3. Device according to any of claims 1 or 2, comprising means (603) to move a zone (1602) illuminated by the illuminating beam onto the means (103) for splitting the illuminating beam into sub-beams.

4. Device according to claim 3, in which one the means to move the zone illuminated by the illuminating beam onto the means for splitting the illuminating beam into sub-beams is adapted to make the illuminated zone of the observed object remain fixed when said rotatably mounted mobile mirror (603) rotates.

5. Device according to any of claims 3 or 4, wherein the means for moving the zone illuminated by the illuminating beam on to means for splitting the illuminating beam into sub-beams comprise said at-least-one rotatably mounted mobile mirror (603), and wherein the optical system is designed so that the illuminating beam is reflected, before reaching the means for splitting the illuminating beam into sub-beams, by said at-least-one rotatably mounted mobile mirror.

6. Device according to any of claims 3 to 5, in which the means to move the zone (1602) illuminated by the illuminating beam onto the means (1601) for splitting the illuminating beam into sub-beams are means for scanning, adapted to repetitively scan said illuminating beam over said means for splitting, and synchronized with the movement of the rotatably mounted mobile mirror.

**7.** Device according to any of claims I to 6, comprising means for eliminating the illuminating beam before it reaches the observed object, and wherein these means are designed to eliminate the illuminating beam when the movement speed of the geometrical image, in the observed object, of a fixed geometrical point of the first image plane, reaches its minimum value.

**8.** The device of Claim 7, wherein the means for eliminating the illuminating beam are formed by a limitation device (606) arranged to be reached by the illuminating beam, said limitation device comprising means for eliminating the part of the illuminating beam which does not reach a selection area (1601), wherein the limitation device, the optical system, and the movement of the rotatably mounted mobile mirror are designed so that the zone (1602) illuminated by the illuminating beam on the limitation device is outside the selection area (1601) when the movement speed of the geometrical image (1702), in the observed object, of a fixed geometrical point of the first image plane, reaches its minimum value.

**9.** Device according to claim 6 and claim 8, wherein

- the limitation device comprises two limitation areas adjacent to the means for splitting, wherein the illuminating beam reaching a limitation area is prevented from following its path towards the rotatably mounted mobile mirror.
- the selection area is made up of the means for splitting,
- the means for scanning the illuminating beam over the means for splitting are adapted so that, during each scan of the illuminating beam over the means for splitting, the zone illuminated by the illuminating beam starts in a first limitation area, crosses the means for splitting, and ends in a second limitation area.

**10.** Device according to claim 8,

- the limitation device being a field diaphragm (1517) through which the illuminating sub-beams pass on their way from the rotatably mounted mirror to the observed object,
- the selection area being the aperture (1611) of said field diaphragm,
- the illuminating sub-beams being focused on the field diaphragm, and
- the movement of the rotatably mirror being adapted so that the field diaphragm is scanned by the illuminating sub-beams (1612) starting in a portion of the field diaphragm which stops all illuminating sub-beams, crossing an aperture of the field diaphragm, and ending in a portion of the field diaphragm which stops all illuminating sub-beams.

**11.** Device according to any of claims 1 to 10, wherein said spatial filtering device is an array of microscopic holes.

**12.** Device according to claim 11, wherein the spatial filtering device is made up of a first absorbing and/or reflecting plate (1700), provided with a plurality of pinholes (1706, 1707), and a second plate (1710) comprising absorbing and/or reflecting parts, and transparent parts (1711), wherein these two plates are placed one against the other and mobile in relation to each other, so that the absorbing and/or reflecting parts of the second plate shut off part of the pinholes of the first plate, and so that the relative movement of the two plates allows the modification of the pinholes left free.

**13.** Device according to any of claims 11 to 12,

- comprising a first lens group (108) made up of all the lenses passed through by the luminous sub- beam between the rotatably mounted mobile mirror and the spatial filtering device, said first lens group having a positive focal length,
- comprising a second lens group (116) made up of all the lenses passed through by the sub-beams to be detected between the spatial filtering device and the rotatably mounted mobile mirror, said second lens group having a positive focal length,
- comprising a plurality of mirrors (109, 104, 115, 143 to 147) redirecting the luminous sub-beams and the sub-beams to be detected in order to bring the sub-beams to be detected back to a face of the rotatably mounted mobile mirror opposite to the face which reflects the luminous sub-beams,
- said plurality of mirrors being adapted so that the geometrical image in the second image plane of a fixed geometrical point of the observed object, is independent of the rotary position of the rotatably mounted mobile mirror around three non-coplanar axes.

**14.** The device of claim 13, wherein each face of the rotatably mounted mobile mirror is in an afocal area, the sub-beams being parallel when they reflect on the rotatably mounted mobile mirror.

15. Device according to any of claims 11 to 14, comprising an auxiliary microlens array (131) passed through by the plurality of sub-beams to be detected, wherein each auxiliary microlens focuses a corresponding sub-beam to be detected onto a corresponding pinhole on the spatial filtering device.

16. Device according to any of claims 1 to 15,

    - the illuminating beam being a laser beam,
    - comprising a rotating wheel (106) comprising thickness variations and placed in a plane where the illuminating sub-beams are focused.

17. The device of any of claims 1 through 16, wherein the means for splitting are a microlens array (103); and further comprising an auxiliary pinholes array (105) placed in a plane in which the illumination sub-beams are focused, each pinhole of said auxiliary pinholes array being passed through by a corresponding illumination sub-beam.

18. The device of any of claims I through 17, wherein the spatial filtering device (130; 606; 1720; 1751) is mounted in a mobile or movable manner, to be replaced by another spatial filtering device.

19. The device of any of claims I through 18, wherein the optical system comprises a beamsplitter (104; 400) for splitting the plurality of illuminating sub-beams (FX) directed towards the observed object, from the light beam (FE) coming from the observed object towards the spatial filtering device (130;403), so that the spatial filtering device is not reached by the illuminating beam or the plurality of illuminating sub-beams.

20. The device of claim 19, wherein:

    - the spatial filtering device is an absorbing and/or reflecting plate provided with a plurality of pinholes through which the light beam (FE) passes in one direction only.
    - the means (105;402) for splitting the illuminating beam into a plurality of sub-beams , the spatial filtering device , and the beamsplitter , are integral with each other and form part of a splitting and filtering unit, and wherein the splitting and filtering unit is mounted in a movable or mobile manner to be replaced by another splitting and filtering unit.

21. Device according to any of claims I to 12, wherein the means for splitting the illuminating beam into a plurality of illuminating sub-beams are formed by the spatial filtering device (606), and wherein the spatial filtering device is mounted in a mobile or movable manner, to be replaced by another spatial filtering device.

22. The device of any of claims 1 to 10, wherein:

    - said spatial filtering device (606) comprises a nonreflecting plate provided with a plurality of reflecting microscopic mirrors (650),
    - the means to split are made up of the spatial filtering device,
    - said at-least-one mobile mirror (603) comprises a reflection face reflecting the plurality of illuminating sub-beams (FX2) coming from the spatial filtering device (606) towards the observed object, the plurality of luminous sub-beams (FE) coming from the observed object towards the spatial filtering device (606) and the plurality of sub-beams to be detected (FD) coming from the spatial filtering device towards the second image plane (P2).

23. The device of claim 22, wherein said reflection face reflects the illuminating beam (FX) towards the spatial filtering device,

24. The device of any of claims 1 to 12 or 21 to 23,:

    - wherein the means for splitting are formed by the spatial filtering device (606),
    - wherein the rotatably mounted mobile mirror reflects the illumination beam towards the spatial filtering device,
    - comprising a dichroic or neutral beamsplitter (601),
    - in which the illumination beam passes through or is reflected by the beamsplitter, and
    - in which the plurality of sub-beams to be detected passes through or is reflected by the beamsplitter between the mobile mirror and the second image plane (P2).

**25.** The device of any of claims 1 to 24, comprising a means (140) to attenuate or suppress the entire illuminating beam, wherein the control of said means to suppress depends on the movement of the mobile mirror, to allow a uniform illumination of the observed object.

**Patentansprüche**

**1.** Konfokale optische Scanvorrichtung zur Visualisierung des beobachteten Bereichs eines beobachteten Objekts (114), welche umfasst:

a) Mittel (103) zur Aufspaltung eines Beleuchtungsstrahlenbündels (FX) in eine Vielzahl von Unter-Beleuchtungsstrahlenbündeln (FX),
b) optische Mittel (108,113) zur Fokussierung der genannten Unter-Beleuchtungsstrahlenbündel auf eine Vielzahl von Beleuchtungspunkten im beobachteten Objekt,
c) optische Mittel (113,108) zur Fokussierung einer Vielzahl von Unter-Lichtstrahlenbündeln (FE), die aus der Vielzahl von Beleuchtungspunkten stammen, in einer Vielzahl von Lichtpunkten einer ersten Bildebene (P1),
d) eine räumliche Filtervorrichtung (130), die in der ersten Bildebene angeordnet ist und das Licht selektiert, welches die Lichtpunkte erreicht, und somit eine Vielzahl abzutastender Unter-Strahlenbündel (FD) bildet,
e) optische Mittel (116,118) zur Fokussierung der Vielzahl der abzutastenden Unter-Strahlenbündel auf eine Vielzahl abzutastender Punkte in einer zweiten Bildebene, und
f) mindestens einen drehbar montierten Spiegel (110, 112), welcher reflektiert:

i) die Vielzahl der auf das beobachtete Objekt gerichteten Unter-Beleuchtungsstrahlenbündel, sodass die Vielzahl der Beleuchtungspunkte das beobachtete Objekt scannt,
ii) die Vielzahl der Unter-Lichtstrahlenbündel, sodass die Vielzahl der Lichtpunkte in der ersten Bildebene feststeht, und
iii) die Vielzahl der abzutastenden Unter-Strahlenbündel, sodass die Vielzahl der abzutastenden Punkte die zweite Bildebene scannt;

wobei die genannte Vorrichtung durch folgende Merkmale **gekennzeichnet** ist:

- die Mittel zur Aufspaltung des Beleuchtungsstrahlenbündels in eine Vielzahl von Unter-Beleuchtungsstrahlenbündeln sind so eingestellt, dass die Vielzahl der Beleuchtungspunkte (503) ein zweidimensionales periodisches Raster bildet,
- der genannte, drehbar montierte Spiegel ist so eingestellt, dass jeder der Beleuchtungspunkte entlang einer Geraden (500) verschoben wird, und
- die genannte Gerade verläuft nicht parallel zu den Basisvektoren des genannten periodischen Rasters ($u,v$).

**2.** Vorrichtung gemäß dem Patentanspruch 1, **dadurch gekennzeichnet, dass** sie so eingestellt ist, dass jeder Beleuchtungspunkt (1802) beim Überstreichen des beobachteten Objekts den beobachteten Bereich (1801) vollständig durchläuft.

**3.** Vorrichtung gemäß einem der Patentansprüche 1 oder 2, welche Mittel (603) umfasst, um einen vom Beleuchtungsstrahlenbündel ausgeleuchteten Bereich (1602) auf die Mittel (606) zur Aufspaltung des Beleuchtungsstrahlenbündels in Unter-Strahlenbündel zu verschieben.

**4.** Vorrichtung gemäß dem Patentanspruch 3, in welcher die Mittel zur Verschiebung des vom Beleuchtungsstrahlenbündel ausgeleuchteten Bereichs auf die Mittel zur Aufspaltung des Beleuchtungsstrahlenbündels in Unter-Strahlenbündel

so eingestellt sind, dass der ausgeleuchtete Bereich im beobachteten Objekt bestehen bleibt, wenn sich der genannte, drehbar montierte Spiegel (603) dreht.

**5.** Vorrichtung gemäß einem der Patentansprüche 3 oder 4, in welcher die Mittel zur Verschiebung des vom Beleuchtungsstrahlenbündel ausgeleuchteten Bereichs auf die Mittel zur Aufspaltung des Beleuchtungsstrahlenbündels in Unter-Strahlenbündel den genannten, drehbar montierten Spiegel (603) umfassen, und in dem das optische System so eingestellt ist, dass das Beleuchtungsstrahlenbündel von dem genannten, drehbar montierten Spiegel reflektiert wird, bevor er die Mittel zur Aufspaltung des Beleuchtungsstrahlenbündels in Unter-Strahlenbündel erreicht.

6.  Vorrichtung gemäß einem der Patentansprüche 3 bis 5, in welcher die Mittel zur Verschiebung des vom Beleuchtungsstrahlenbündel ausgeleuchteten Bereichs (1602) auf die Mittel (601) zur Aufspaltung des Beleuchtungsstrahlenbündels in Unter-Strahlenbündel Mittel zum Scannen sind, die so eingestellt sind, dass sie die genannten Mittel zur Aufspaltung immer wieder mit dem genannten Beleuchtungsstrahlenbündel scannen, und die mit der Bewegung des drehbar montierten Spiegel synkronisiert sind.

7.  Vorrichtung gemäß einem der Patentansprüche 1 bis 6, welche Mittel umfasst, mit denen das Beleuchtungsstrahlenbündel unterdrückt wird, bevor es das beobachtete Objekt erreicht, und in welcher diese Mittel so eingestellt sind, dass das Beleuchtungsstrahlenbündel unterdrückt wird, wenn die Verschiebungsgeschwindigkeit des geometrischen Bilds eines festen geometrischen Punkts der ersten Bildebene im beobachteten Objekt ihren niedrigsten Wert erreicht.

8.  Vorrichtung gemäß dem Patentanspruch 7, in welcher die Mittel zur Unterdrückung des Beleuchtungsstrahlenbündels durch eine Begrenzungsvorrichtung (606) gebildet werden, die so angeordnet ist, dass sie vom Beleuchtungsstrahlenbündel erreicht wird, wobei die genannte Begrenzungsvorrichtung Mittel zur Unterdrückung desjenigen Teils des Beleuchtungsstrahlenbündels umfasst, der nicht die Selektionsfläche (1601) erreicht, in welcher die Begrenzungsvorrichtung, das optische System, und die Bewegung des drehbar montierten Spiegels so eingestellt sind, dass der vom Beleuchtungsstrahlenbündel ausgeleuchtete Bereich (1602) auf der Begrenzungsvorrichtung sich außerhalb der Selektionsfläche (1601) befindet, wenn die Verschiebungsgeschwindigkeit des geometrischen Bildes (1702) eines festen geometrischen Punkts der ersten Bildebene im beobachteten Objekt ihren niedrigsten Wert erreicht.

9.  Vorrichtung gemäß dem Patentanspruch 6 und dem Patentanspruch 8, in welcher:

    - zur Begrenzungsvorrichtung gehören zwei an die Mittel zur Aufspaltung unmittelbar angrenzende Bereiche zur Begrenzung des Strahlenbündels, wobei das Beleuchtungsstrahlenbündel, welches die Bereiche zur Begrenzung des Strahlenbündels erreicht, daran gehindert wird, seinen Weg zu dem drehbar montierten Spiegel fortzusetzen,
    - die Selektionsfläche durch die Mittel (1601) zur Aufspaltung gebildet wird,
    - die Mittel zum Scannen der Mittel zur Aufspaltung mit dem genannten Beleuchtungsstrahlenbündel so eingestellt sind, dass während jedes Scanvorgangs der Mittel zur Aufspaltung durch das Beleuchtungsstrahlenbündel der durch das Beleuchtungsstrahlenbündel ausgeleuchtete Bereich von einem ersten Bereich zur Begrenzung des Strahlenbündels ausgeht (Fig. 23 a), die Mittel zur Aufspaltung durchläuft (Fig. 23 b-f), und bis zu einem zweiten Bereich zur Begrenzung des Strahlenbündels gelangt (Fig. 23 g).

10. Vorrichtung gemäß dem Patentanspruch 8, wobei:

    - die Begrenzungsvorrichtung eine Leuchtfeldblende (1517) ist, die von den Lichtstrahlenbündeln auf deren Weg vom drehbar montierten Spiegels zum beobachteten Objekt durchlaufen wird,
    - die Selektionsfläche die Öffnung (1611) der genannten Leuchtfeldblende ist,
    - die Unter-Beleuchtungsstrahlenbündel auf die Leuchtfeldblende fokussiert sind, und
    - die Bewegung des drehbar montierten Spiegels so eingestellt ist, dass die Unter-Beleuchtungsstrahlenbündel (1612) die Leuchtfeldblende scannen, indem sie von einem Teil der Leuchtfeldblende ausgehen, der sämtliche Unter-Beleuchtungsstrahlenbündel unterbricht, die Öffnung der Leuchtfeldblende durchlaufen, und auf einem Teil der Leuchtfeldblende enden, der sämtliche Unter-Beleuchtungsstrahlenbündel unterbricht.

11. Vorrichtung gemäß einem der Patentansprüche 1 bis 10, in welcher die räumliche Filtervorrichtung ein Raster aus mikroskopischen Löchern ist.

12. Vorrichtung gemäß dem Patentanspruch 11, in welcher die erste räumliche Filtervorrichtung eine erste absorbierende und/oder reflektierende Platte (1700) umfasst, die mit einer Vielzahl mikroskopischer Löcher (1706,1707) versehen ist, sowie eine zweiten Platte (1710), die absorbierende und/oder reflektierende Teile und transparente Teile (1711) umfasst, in der diese beiden Platten direkt aufeinander und beweglich zueinander angeordnet werden, sodass die absorbierenden und/oder reflektierenden Teile der zweiten Platte einen Teil der mikroskopischen Löcher der ersten Platte verschließen, und dass die relative Verschiebung der beiden Platten zueinander eine Veränderung der frei bleibenden mikroskopischen Löcher ermöglicht.

13. Vorrichtung gemäß einem der Patentansprüche 1 bis 12,

- die eine erste Gruppe von Linsen (108) umfasst, welche durch sämtliche Linsen gebildet wird, die von dem Unter-Beleuchtungsstrahlenbündel zwischen dem drehbar montierten Spiegel und der ersten räumlichen Filtervorrichtung durchlaufen werden, wobei die genannte erste Gruppe eine positive Brennweite hat,

- die eine zweite Gruppe von Linsen (116) umfasst, welche durch sämtliche Linsen gebildet wird, die von dem abzutastenden Unter-Strahlenbündel zwischen der räumlichen Filtervorrichtung und dem drehbar montierten Spiegel durchlaufen werden, wobei die genannte zweite Linsengruppe eine positive Brennweite hat,

- die eine Vielzahl von Spiegeln (109,104, 115, 143-147) umfasst, welche das Lichtstrahlenbündel und die abzutastenden Unter-Strahlenbündel umlenkt, sodass die abzutastenden Unter-Strahlenbündel auf eine Fläche des drehbar montierten Spiegels zurückgeführt werden, die derjenigen Seite gegenüber liegt, welche die Unter-Lichtstrahlenbündel reflektiert,

- wobei die genannte Vielzahl von Spiegeln so eingestellt ist, dass das geometrische Bild eines festen geometrischen Punkts des beobachteten Objekts in der zweiten Bildebene unabhängig von der Position des um drei nicht koplanare Achsen drehbar montierten Spiegels ist.

**14.** Vorrichtung gemäß dem Patentanspruch 13, wobei sich jede Fläche des drehbar montierten Spiegels in einem afokalen Bereich befindet, und die Unter-Strahlenbündel parallel sind, wenn sie an dem drehbar montierten Spiegel reflektiert werden.

**15.** Vorrichtung gemäß einem der Patentansprüche 11 bis 14, die ein Raster von Vorsatzmikrolinsen (131) umfasst, das von der Vielzahl der abzutastenden Unter-Strahlenbündel durchlaufen wird, wobei jede Vorsatzmikrolinse ein entsprechendes abzutastendes Unter-Strahlenbündel auf einem mikroskopischen Loch der räumlichen Filtervorrichtung fokussiert.

**16.** Vorrichtung gemäß einem der Patentansprüche 1 bis 15,

- wobei das Beleuchtungsstrahlenbündel ein Laser-Strahlenbündel ist,
- die ein drehendes Rad (106) umfasst, dessen Dicke variiert und das in einer Ebene platziert ist, wo die Unter-Beleuchtungsstrahlenbündel fokussiert werden,

**17.** Vorrichtung gemäß einem der Patentansprüche 1 bis 16, in welcher die Mittel zur Aufspaltung ein Raster aus Mikrolinsen (103) sind, und die auch ein Hilfsraster aus mikroskopischen Löchern (105) umfasst, das in einer Ebene angeordnet ist, in welcher die Unter-Beleuchtungsstrahlenbündel fokussiert werden, wobei jedes mikroskopische Loch des genannten Hilfsrasters von einem entsprechenden Unter-Beleuchtungsstrahlenbündel durchlaufen wird.

**18.** Vorrichtung gemäß einem der Patentansprüche 1 bis 17, in welcher die räumliche Filtervorrichtung (130, 606, 1720, 1751) beweglich oder herausnehmbar montiert ist, sodass sie durch eine andere räumliche Filtervorrichtung ersetzt werden kann.

**19.** Vorrichtung gemäß einem der Patentansprüche 1 bis 18, welche einen Strahlenlteiler (104;400) umfasst, um die Vielzahl der auf das beobachtete Objekt gerichteten Unter-Beleuchtungsstrahlenbündel (FX) von dem Lichtstrahlenbündel (FE) zu trennen, welches von dem beobachteten Objekt zu dem ersten räumlichen Filtersystem (130; 403) gelangt, sodass das erste räumliche Filtersystem nicht von dem Beleuchtungsstrahlenbündel erreicht wird,

**20.** Vorrichtung gemäß dem Patentanspruch 19, in welcher:

- das erste räumliche Filtersystem eine absorbierende und/oder reflektierende Platte mit einer Vielzahl von mikroskopischen Löchern ist, die in einer einzigen Richtung von dem Lichtstrahlenbündel (FE) durchlaufen werden,
- die Mittel zur Aufspaltung des Beleuchtungsstrahlenbündels in eine Vielzahl von Unter-Strahlenbündeln (105: 402), das erste räumliche Filtersystem und der Strahlenteiler fest miteinander verbunden sind und Bestandteil einer Aufspalt- und Filterbaugruppe sind, und in welcher die Aufspalt- und Filterbaugruppe herausnehmbar oder beweglich montiert ist, sodass sie durch eine andere Aufspalt- und Filterbaugruppe ersetzt werden kann.

**21.** Vorrichtung gemäß einem der Patentansprüche 1 bis 12, **dadurch gekennzeichnet, dass** die Mittel zur Aufspaltung des Beleuchtungsstrahlenbündels in eine Vielzahl von Unter-Beleuchtungsstrahlenbündeln durch das erste räumliche Filtersystem (606) gebildet werden, und dass die räumliche Filtervorrichtung herausnehmbar oder beweglich angebracht ist, sodass sie durch eine andere räumliche Filtervorrichtung ersetzt werden kann.

**22.** Vorrichtung gemäß einem der Patentansprüche 1 bis 10, in welcher:

- das erste räumliche Filtersystem (606) eine nicht absorbierende Platte mit einer Vielzahl von reflektierenden mikroskopischen Spiegeln (650) umfasst,
- die Mittel zur Aufspaltung durch das räumliche Filtersystem gebildet werden,
- mindestens der eine genannte, beweglich montierte Spiegel (603) eine Reflexionsfläche umfasst, wobei die Vielzahl der Unter-Beleuchtungsstrahlenbündel (FX2) von der räumlichen Filtervorrichtung kommt und auf das beobachtete Objekt gelenkt wird, die Vielzahl der Unter-Lichtstrahlenbündel (FE) von dem beobachteten Objekt kommt und auf das erste räumliche Filtersystem gelenkt wird, und die Vielzahl derabzutastende Unter-Strahlenbündel (FD) von dem räumlichen Filtersystem kommt und zur zweiten Bildebene (P2) gelenkt wird.

**23.** Vorrichtung gemäß dem Patentanspruch 22, welche das auf das räumliche Filtersystem gelenkte Beleuchtungsstrahlenbündel reflektiert,

**24.** Vorrichtung gemäß einem der Patentansprüche 1 bis 14 oder 21 bis 23,

- in welcher die Mittel zur Aufspaltung durch das räumliche Filtersystem gebildet werden,
- in welcher der drehbar montierte Spiegel das Beleuchtungsstrahlenbündel in Richtung der räumlichen Filtervorrichtung reflektiert,
- die einen dichroitischen oder teilweise transparenten Strahlenteilerspiegel (601) umfasst,
- in welcher das Beleuchtungsstrahlenbündel den Strahlenteilerspiegel durchläuft oder von diesem auf seinem Weg zu dem drehbar montierten Spiegel reflektiert wird,und
- in welcher die Vielzahl der abzutastende Unter-Strahlenbündel den dichroitischen Spiegel durchläuft oder von diesem reflektiert wird., zwischen den drehbar montierte Spiegel und die zweite Bildebene.

**25.** Vorrichtung gemäß einem der Patentansprüche 1 bis 24, welche Mittel umfasst, um dem Beleuchtungstrahlenbündel zu unterdrücken oder abschwächen, und die Steuerung der Mittel zur Unterdrückung oder Abschwächung von der Bewegung des drehbar montierten Spiegels abhängt, sodass die Beleuchtung des Beobachteten Objekts regulär wird.

Figure 1

—130

Figure 2

**P**

Figure 3

Figure 4

Figure 5

Figure 6

Figure 7

Figure 8

Figure 9

Figure 10

Figure 11

Figure 12

Figure 13

Figure 14

Figure 15

Figure 16

Figure 17

Figure 18

(b)

1701

1702

(c)

(d)

(e)

(f)

Figure 19

Figure 20

Figure 21

Figure 22

Figure 23

EP 1 330 671 B1

Figure 24

53

1517

1611

(a)

1612

(b)

(c)

Figure 25

Figure 26

Fig.27

1720

1721

1722

1723

1724

1725

1726

Figure 28

1730

Figure 29

(a)

1741 —

— 1751

(b)

1741 —

1742 —

1743 —

Figure 30

**EP 1 330 671 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5239178 A
- US 4170398 A
- WO 0122146 A
- US 6028306 A, Hayashi

**Littérature non-brevet citée dans la description**

- **G.M. SVISHCHEV.** Microscope for the study of transparent light-scattering objects in incident light. *Optics and spectroscopy,* 1969, vol. 26, 171-172
- **G.J. BRAKENHOFF ; K. VISSCHER.** Imaging modes for bilateral confocal scanning in microscopy. *Journal of Microscopy,* 01 Juillet 1993, vol. 171, 17-26